(19) Europäisches Patentamt / European Patent Office / Office européen des brevets

(11) **EP 4 250 817 A1**

(12) **EUROPEAN PATENT APPLICATION**
published in accordance with Art. 153(4) EPC

(43) Date of publication:
**27.09.2023 Bulletin 2023/39**

(21) Application number: **21914299.9**

(22) Date of filing: **27.12.2021**

(51) International Patent Classification (IPC):
**H04W 36/00** (2009.01)

(52) Cooperative Patent Classification (CPC):
**H04W 36/00; H04W 36/08; H04W 36/30**

(86) International application number:
**PCT/CN2021/141779**

(87) International publication number:
**WO 2022/143563 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.12.2020 CN 202011644666**

(71) Applicant: **Huawei Technologies Co., Ltd.**
**Shenzhen, Guangdong 518129 (CN)**

(72) Inventors:
• **LUO, Hejia**
**Shenzhen, Guangdong 518129 (CN)**

• **WANG, Xiaolu**
**Shenzhen, Guangdong 518129 (CN)**
• **LI, Rong**
**Shenzhen, Guangdong 518129 (CN)**
• **MA, Jianglei**
**Shenzhen, Guangdong 518129 (CN)**
• **WANG, Jun**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **CELL SELECTION METHOD AND APPARATUS**

(57)   This application provides a cell selection method and apparatus, to resolve a problem that communication quality is poor because a terminal device may select an inappropriate cell based on a priority configuration of a frequency of a cell. The method includes: A terminal device performs measurement based on measurement configuration information of N cells, and determines M candidate cells based on a measurement result, where N and M are integers greater than 0, and M is less than N; and the terminal device selects a target cell from the M candidate cells based on first information, where the first information includes information about a network type of at least one of the M candidate cells, and information about a network type of a first candidate cell in the M candidate cells indicates that the first candidate cell is a terrestrial network, a geostationary earth orbit satellite network, a medium earth orbit satellite network, a low earth orbit satellite network, or a high-altitude platform station network. Different types of networks have different communication quality, and the terminal device may select, based on network types of cells, a target cell that satisfies a service requirement of the terminal device.

FIG. 8

**Description**

**CROSS-REFERENCE TO RELATED APPLICATIONS**

This application claims priority to Chinese Patent Application No. 202011644666.2, filed with the China National Intellectual Property Administration on December 30, 2020 and entitled "CELL SELECTION METHOD AND APPARATUS", which is incorporated herein by reference in its entirety.

**TECHNICAL FIELD**

The present invention relates to the field of communication technologies, and in particular, to a cell selection method and apparatus.

**BACKGROUND**

A non-terrestrial network (non-terrestrial network, NTN) uses devices such as uncrewed aerial vehicles, high-altitude platform stations, and satellites for networking, to provide services such as data transmission and voice communication for user equipment (user equipment, UE). NTN communication has features such as wide coverage and a long latency. Such differences from a common terrestrial base station signal greatly affect services of user equipment (user equipment, UE), and further affect a decision such as cell reselection. For example, in a current reselection mechanism, a cell priority is bound to a frequency, and when a service type of the UE is a latency-sensitive communication service, the UE may select a cell covered by a satellite, as a target cell according to a priority configuration of the cell. Consequently, communication quality is poor, and user experience is compromised.

**SUMMARY**

This application provides a cell selection method and apparatus, to resolve a problem that communication quality is poor because UE may select an inappropriate cell when selecting a target cell based on a priority configuration of a frequency of a cell.

According to a first aspect, an embodiment of this application provides a cell selection method. The method includes: A terminal device performs measurement based on measurement configuration information of N cells, where N is an integer greater than 0; the terminal device determines M candidate cells based on a measurement result, where M is an integer greater than 0 and less than N; and the terminal device selects a target cell from the M candidate cells based on first information, where the first information includes information about a network type of at least one of the M candidate cells, and information about a network type of a first candidate cell in the M candidate cells indicates that the first candidate cell is a terrestrial network, a geostationary earth orbit satellite network, a medium earth orbit satellite network, a low earth orbit satellite network, or a high-altitude platform station network.

Different types of networks have different communication quality. For example, a cellular network has better stability, and a 300-km low earth orbit satellite network has a lower latency. In this embodiment of this application, when performing cell reselection, the terminal device may select a target cell based on a network type, so that the target cell can satisfy a service requirement of the terminal device. For example, when a service type of the terminal device is a communication service that has a high requirement for stability, the terminal device may preferentially select a cellular network cell with good stability. When the service type of the terminal device is a communication service that has a low requirement for stability, the terminal device may select a 300-km low earth orbit satellite network cell or the like, so that a probability that the terminal device selects an inappropriate cell for reselection can be reduced, and user experience can be improved.

In a possible design, the information about the network type of the first candidate cell may include orbit information of a network device corresponding to the first candidate cell. Satellites at different orbital heights may have different latencies, processing capabilities, and the like. In the foregoing design, the network type is further classified according to the orbit information, so that the terminal device can choose to hand over to a cell that meets the requirement.

In a possible design, the information about the network type of the first candidate cell may include network architecture information of the network device corresponding to the first candidate cell. For satellites at a same orbital height, different network architectures correspond to different latencies and processing capabilities. For example, a regenerative architecture has a lower latency. In the foregoing design, the network type is further classified according to the network architectures, so that the terminal device can choose to hand over to a cell that meets the requirement.

In a possible design, the information about the network type of the first candidate cell may include beam information of the first candidate cell, and the beam information indicates a beam deployment manner. A staring beam means a low handover frequency. In the foregoing design, the network type is further classified according to the beam deployment manner, so that the terminal device can choose to hand over to a cell that meets the requirement.

In a possible design, that a terminal device performs measurement based on measurement configuration information of N cells includes: For an $n^{th}$ cell in the N cells, if a priority corresponding to a network type of the $n^{th}$ cell is higher than a priority corresponding to a network type of a serving cell, the terminal device performs measurement on the $n^{th}$ cell; or if the priority corresponding to the network type of the $n^{th}$ cell is not higher than the priority corresponding to the network type of the serving cell, the terminal device performs measurement on the $n^{th}$ cell when the serving cell satisfies a preset condition. According to the foregoing design, unnecessary measurement performed by the terminal device can be reduced, so that the terminal device can focus on measuring a cell that is more suitable for service characteristics.

In a possible design, that the terminal device selects a target cell from the M candidate cells based on first information includes: The terminal device selects the target cell from the M candidate cells according to the first information and a first selection rule, where the first selection rule is used to select the target cell, and the first selection rule includes a correspondence between at least one network type and a priority. In the foregoing design, a corresponding priority is set based on network types of cells, so that the terminal device can select, based on the network types of the cells, a cell that satisfies the service requirement of the terminal device.

In a possible design, before the terminal device performs measurement based on the measurement configuration information of the N cells, the terminal device may receive the measurement configuration information of the N cells and the first information from the serving cell. In the foregoing design, a network device corresponding to the serving cell of the terminal device may send the first information to the terminal device before the terminal device performs cell measurement, so that the first information may be sent by using a radio resource control (radio resource control, RRC) configuration at a terminal device level, and there is a small amount of broadcast signaling, thereby reducing overheads of the network device.

In a possible design, after the terminal device determines the M candidate cells based on the measurement result, the terminal device may receive the first information from the first candidate cell in the M candidate cells. In the foregoing design, the terminal device obtains the first information from the candidate cell only when determining to camp on the cell. In this way, configuration information that needs to be stored by the terminal device can be reduced, thereby reducing storage overheads of the terminal device. In addition, in this way, a real-time status of a network can be more accurately reflected.

In a possible design, the terminal device receives second information from the serving cell, where the second information indicates the first selection rule. In the foregoing design, the network device may indicate a selection rule used by the terminal device, so that overheads of the terminal device can be reduced.

In a possible design, the terminal device receives third information from the serving cell, where the third information indicates the service type of the terminal device. According to the foregoing design, the service type of the terminal device that is recorded on the network device side may be consistent with an actual service type of the terminal device.

In a possible design, before the terminal device selects the target cell from the M candidate cells according to the first selection rule and the first information, the terminal device may determine the first selection rule from at least one preconfigured selection rule based on the service type of the terminal device. According to the foregoing design, the target cell selected by the terminal device better meets the service requirement of the terminal device, and signaling overheads of the network device can be reduced.

According to a second aspect, an embodiment of this application provides a cell selection method. The method includes: A terminal device performs measurement based on measurement configuration information of N cells, where N is an integer greater than 0; the terminal device determines M candidate cells based on a measurement result, where M is an integer greater than 0 and less than N; and the terminal device selects a target cell from the M candidate cells based on first information, where the first information includes information about a capability of at least one of the M candidate cells, and information about a capability of a first candidate cell in the M candidate cells indicates at least one of the following information: a network round-trip latency of the first candidate cell, a total network capacity of the first candidate cell, a remaining network capacity of the first candidate cell, and a network handover frequency of the first candidate cell.

In this embodiment of this application, when performing cell reselection, the terminal device may select a target cell based on a capability of the cell, so that the target cell may satisfy a service requirement of the terminal device. For example, when a service type of the terminal device requires a low network handover frequency, the terminal device may preferentially select a cell that has a low network handover frequency. When the service type of the terminal device requires a low latency, the terminal device may select a cell that has a low latency as the target cell, so that a probability that the terminal device selects an inappropriate cell for reselection can be reduced, and user experience can be improved.

In addition, in this embodiment of this application, key indicators such as a network round-trip latency, a remaining network capacity, a total network capacity, and a network handover frequency of a neighboring cell are indicated, so that a network deployment status of a network device can be avoided from being exposed, thereby ensuring network privacy.

In a possible design, that the terminal device selects a target cell from the M candidate cells based on first information includes: The terminal device selects the target cell from the M candidate cells according to the first information and a first selection rule, where the first selection rule is used to select the target cell, and the first selection rule includes a condition corresponding to at least one parameter. In the foregoing design, a corresponding priority is set based on network types of cells, so that the terminal device can select, based on the network types of the cells, a cell that satisfies the service requirement of the terminal device.

In a possible design, before the terminal device performs measurement based on the measurement configuration information of the N cells, the terminal device may receive the measurement configuration information of the N cells and the first information from the serving cell. In the foregoing design, a network device corresponding to the serving cell of the terminal device may send the first information to the terminal device before the terminal device performs cell measurement, so that the first information may be sent by using an RRC configuration at a terminal device level, and there is a small amount of broadcast signaling, thereby reducing overheads of the network device.

In a possible design, after the terminal device determines the M candidate cells based on the measurement result, the terminal device may receive the first information from the first candidate cell in the M candidate cells. In the foregoing design, the terminal device obtains the first information from the candidate cell only when determining to camp on the cell. In this way, configuration information that needs to be stored by the terminal device can be reduced, thereby reducing storage overheads of the terminal device. In addition, in this way, a real-time status of a network can be more accurately reflected.

In a possible design, the terminal device receives second information from the serving cell, where the second information indicates the first selection rule. In the foregoing design, the network device may indicate a selection rule used by the terminal device, so that overheads of the terminal device can be reduced.

In a possible design, the terminal device receives third information from the serving cell, where the third information indicates the service type of the terminal device. According to the foregoing design, the service type of the terminal device that is recorded on the network device side may be consistent with an actual service type of the terminal device.

In a possible design, before the terminal device selects the target cell from the M candidate cells according to the first selection rule and the first information, the terminal device may determine the first selection rule from at least one preconfigured selection rule based on the service type of the terminal device. According to the foregoing design, signaling overheads of the network device can be reduced.

According to a third aspect, an embodiment of this application provides a cell selection method. The method includes: A network device determines first information and sends the first information to a terminal device. The first information includes information about a network type of at least one cell, and information about a network type of a first cell in the at least one cell indicates that the first cell is a terrestrial network, a geostationary earth orbit satellite network, a medium earth orbit satellite network, a low earth orbit satellite network, or a high-altitude platform station network.

Different types of networks have different communication quality. For example, a cellular network has better stability, and a 300-km low earth orbit satellite network has a lower latency. In this embodiment of this application, when performing cell reselection, the terminal device may select a target cell based on a network type, so that the target cell may satisfy a service requirement of the terminal device. For example, when a service type of the terminal device is a communication service that has a high requirement for stability, the terminal device may preferentially select a cellular network cell with good stability. When the service type of the terminal device is a communication service that has a low requirement for stability, the terminal device may select a 300-km low earth orbit satellite network cell or the like, so that a probability that the terminal device selects an inappropriate cell for reselection can be reduced, and user experience can be improved.

In a possible design, the information about the network type of the first candidate cell may include orbit information of the network device corresponding to the first candidate cell. Satellites at different orbital heights may have different latencies, processing capabilities, and the like. In the foregoing design, the network type is further classified according to the orbit information, so that the terminal device can choose to hand over to a cell that meets the requirement.

In a possible design, the information about the network type of the first candidate cell may include network architecture information of the network device corresponding to the first candidate cell. For satellites at a same orbital height, different network architectures correspond to different latencies and processing capabilities. For example, a regenerative architecture has a lower latency. In the foregoing design, the network type is further classified according to the network architectures, so that the terminal device can choose to hand over to a cell that meets the requirement.

In a possible design, the information about the network type of the first candidate cell may include beam information of the first candidate cell, and the beam information indicates a beam deployment manner. A staring beam means a low handover frequency. In the foregoing design, the network type is further classified according to the beam deployment manner, so that the terminal device can choose to hand over to a cell that meets the requirement.

In a possible design, the network device determines a selection rule based on the service type of the terminal device and sends second information to the terminal device. The selection rule is used to select the target cell, and the selection rule includes a correspondence between at least one network type and a priority. The second information indicates the selection rule. In the foregoing design, the network device may determine, based on the service type of the terminal device, the selection rule used by the terminal device, so that the target cell selected by the terminal device can better meet the service requirement of the terminal device, and overheads of the terminal device can be reduced.

In a possible design, the network device may further send third information to the terminal device. The third information indicates the service type of the terminal device. According to the foregoing design, the service type of the terminal device that is recorded on the network device side may be consistent with an actual service type of the terminal device.

According to a fourth aspect, an embodiment of this application provides a cell selection method. The method includes: A network device determines first information and sends the first information to a terminal device. The first information includes information about a capability of at least one cell, and information about a capability of a first cell in the at least one cell indicates at least one of the following information: a network round-trip latency of the first cell, a total network capacity of the first cell, a remaining network capacity of the first cell, and a network handover frequency of the first cell.

In this embodiment of this application, when performing cell reselection, the terminal device may select a target cell based on a capability of the cell, so that the target cell may satisfy a service requirement of the terminal device. For example, when a service type of the terminal device requires a low network handover frequency, the terminal device may preferentially select a cell that has a low network handover frequency. When the service type of the terminal device requires a low latency, the terminal device may select a cell that has a low latency as the target cell, so that a probability that the terminal device selects an inappropriate cell for reselection can be reduced, and user experience can be improved. In addition, in this embodiment of this application, key indicators such as a network round-trip latency, a remaining network capacity, a total network capacity, and a network handover frequency of a neighboring cell are indicated, so that a network deployment status of a network device can be avoided from being exposed, thereby ensuring network privacy.

In a possible design, the network device determines a selection rule based on the service type of the terminal device and sends second information to the terminal device. The selection rule is used to select the target cell, and the selection rule includes a correspondence between at least one network type and a priority. The second information indicates the selection rule. In the foregoing design, the network device may determine, based on the service type of the terminal device, the selection rule used by the terminal device, so that the target cell selected by the terminal device can better meet the service requirement of the terminal device, and overheads of the terminal device can be reduced.

In a possible design, the network device may further send third information to the terminal device. The third information indicates the service type of the terminal device. According to the foregoing design, the service type of the terminal device that is recorded on the network device side may be consistent with an actual service type of the terminal device.

According to a fifth aspect, this application provides a communication apparatus. The apparatus may be a terminal device, or may be a chip or a chipset in a terminal device. The apparatus may include a processing unit and a storage unit.

When the apparatus is a terminal device, the processing unit may be a processor, and the storage unit may be a memory. The apparatus may further include a transceiver unit, and the transceiver unit is configured to communicate with a network device. The transceiver unit may be a transceiver. The storage unit is configured to store instructions, and the processing unit executes the instructions stored in the storage unit, so that the terminal device performs corresponding functions of the first or second aspect.

When the apparatus is a chip or a chipset in a terminal device, the processing unit may be a processor, and the storage unit may be a storage unit (such as a register or a cache) in the chip or the chipset, or may be a storage unit (such as a read-only memory or a random access memory) located outside the chip or the chipset. The apparatus may further include a transceiver unit, and the transceiver unit is configured to communicate with a network device. The transceiver unit may be an input/output interface, a pin, a circuit, or the like. The storage unit is configured to store instructions, and the processing unit executes the instructions stored in the storage unit, so that the terminal device performs corresponding functions of the first or second aspect.

According to a sixth aspect, this application provides a communication apparatus. The apparatus may be a network device, or may be a chip or a chipset in a network device. The apparatus may include a processing unit and a transceiver unit.

When the apparatus is a network device, the processing unit may be a processor, and the transceiver unit may be a transceiver. The apparatus may further include a storage unit, and the storage unit may be a memory. The storage unit is configured to store instructions, and the processing unit executes the instructions stored in the storage unit, so that the network device performs corresponding functions of the third or fourth aspect.

When the apparatus is a chip or a chipset in a network device, the processing unit may be a processor, and the transceiver unit may be an input/output interface, a pin, a circuit, or the like. The apparatus may further include a storage unit. The storage module may be a storage module (such as a register or a cache) in the chip or the chipset, or may be a storage module (such as a read-only memory or a random access memory) outside the chip or the chipset. The storage unit is configured to store instructions, and the processing unit executes the instructions stored in the storage unit, so that the network device performs corresponding functions of the third or fourth aspect.

According to a seventh aspect, an embodiment of this application provides a communication apparatus. The apparatus includes a communication interface and a processor. The communication interface is used by the apparatus to communicate with another device, for example, receive and send data or a signal. For example, the communication interface may be a transceiver, a circuit, a bus, a module, or another type of interface, and the another device may be a network device. The processor is configured to invoke a group of programs, instructions, or data, to perform the method described in any one of the first aspect or the possible designs of the first aspect, or to perform the method described in any one of the second aspect or the possible designs of the second aspect. The apparatus may further include a memory, configured to store the programs, the instructions, or the data that are invoked by the processor. The memory is coupled to the processor, and when executing the instructions or the data stored in the memory, the processor may implement the method described in any one of the first aspect or the possible designs of the first aspect, or perform the method described in any one of the second aspect or the possible designs of the second aspect.

According to an eighth aspect, an embodiment of this application provides a communication apparatus. The apparatus includes a communication interface and a processor. The communication interface is used by the apparatus to communicate with another device, for example, receive and send data or a signal. For example, the communication interface may be a transceiver, a circuit, a bus, a module, or another type of interface, and the another device may be a terminal device. The processor is configured to invoke a group of programs, instructions, or data, to perform the method described in any one of the third aspect or the possible designs of the third aspect, or to perform the method described in any one of the fourth aspect or the possible designs of the fourth aspect. The apparatus may further include a memory, configured to store the programs, the instructions, or the data that are invoked by the processor. The memory is coupled to the processor, and when executing the instructions or the data stored in the memory, the processor may implement the method described in any one of the third aspect or the possible designs of the third aspect, or perform the method described in any one of the fourth aspect or the possible designs of the fourth aspect.

According to a ninth aspect, an embodiment of this application further provides a computer-readable storage medium. The computer-readable storage medium stores computer-readable instructions. When the computer-readable instructions are run on a computer, the method in any one of the first to fourth aspects and the possible designs of the first to fourth aspects is performed.

According to a tenth aspect, an embodiment of this application provides a chip system. The chip system includes a processor, and may further include a memory, configured to implement the method in any one of the first to fourth aspects and the possible designs of the first to fourth aspects. The chip system may include a chip, or may include a chip and another discrete device.

According to an eleventh aspect, an embodiment of this application provides a communication system. The system includes a network device and a terminal device. The terminal device is configured to perform the method in any one of the first aspect or the possible designs of the first aspect, and the network device is configured to perform the method in any one of the third aspect or the possible designs of the third aspect.

According to a twelfth aspect, an embodiment of this application provides a communication system. The system includes a network device and a terminal device. The terminal device is configured to perform the method in any one of the second aspect or the possible designs of the second aspect, and the network device is configured to perform the method in any one of the fourth aspect or the possible designs of the fourth aspect.

According to a thirteenth aspect, a computer program product including instructions is provided. When the computer program product runs on a computer, the method in any one of the first to fourth aspects and the possible designs of the first to fourth aspects is performed.

According to a fourteenth aspect, an embodiment of this application provides a communication apparatus. The communication apparatus includes a processor, a memory, and a transceiver. The transceiver is configured to receive or send a signal, the memory is configured to store program code or instructions, and the processor is configured to invoke the program code or the instructions from the memory to perform the method in the first or second aspect.

According to a fifteenth aspect, an embodiment of this application provides a communication apparatus. The communication apparatus includes a processor, a memory, and a communication interface. The communication interface is configured to receive or send a signal, the memory is configured to store program code or instructions, and the processor is configured to invoke the program code or the instructions from the memory to perform the method in the third or fourth aspect.

According to a sixteenth aspect, an embodiment of this application provides a communication apparatus. The communication apparatus includes a processor and an interface circuit. The interface circuit is configured to receive computer program code or instructions and transmit the computer program code or the instructions to the processor. The processor runs the computer program code or the instructions to perform the corresponding method in the first or second aspect.

According to a seventeenth aspect, an embodiment of this application provides a communication apparatus. The communication apparatus includes a processor and an interface circuit. The interface circuit is configured to receive computer program code or instructions and transmit the computer program code or the instructions to the processor. The processor runs the computer program code or the instructions to perform the corresponding method in the third or fourth aspect.

According to an eighteenth aspect, an embodiment of this application provides a communication apparatus. For example, the communication apparatus may be a chip, and the communication apparatus includes a logic circuit and an input/output interface. The input/output interface is used by the apparatus to communicate with a network device, for example, receive first information. The logic circuit is configured to run computer program code or instructions to perform the corresponding method in the first or second aspect.

According to a nineteenth aspect, an embodiment of this application provides a communication apparatus. For example, the communication apparatus may be a chip, and the communication apparatus includes a logic circuit and an input/output interface. The input/output interface is used by the apparatus to communicate with a terminal device, for example, send first information. The logic circuit is configured to run computer program code or instructions to perform the corresponding method in the third or fourth aspect.

For technical effects brought by any implementation of the fifth to nineteenth aspects, refer to beneficial effects in the corresponding method provided above. Details are not described herein again.

## BRIEF DESCRIPTION OF DRAWINGS

FIG. 1 is a schematic diagram of a fixed cell according to an embodiment of this application;
FIG. 2 is a schematic diagram of a moving cell according to an embodiment of this application;
FIG. 3 is a schematic diagram of a transparent forwarding architecture according to an embodiment of this application;
FIG. 4 is a schematic diagram of a regenerative architecture according to an embodiment of this application;
FIG. 5 is a schematic diagram of a communication scenario according to an embodiment of this application;
FIG. 6 is a schematic diagram of another communication scenario according to an embodiment of this application;
FIG. 7 is a schematic diagram of a structure of an access network device according to an embodiment of this application;
FIG. 8 is a schematic flowchart of a cell selection method according to an embodiment of this application;
FIG. 9 is a schematic diagram of a method for obtaining first information by a network device according to an embodiment of this application;
FIG. 10 is a schematic flowchart of another cell selection method according to an embodiment of this application;
FIG. 11 is a schematic diagram of a structure of a cell handover apparatus according to an embodiment of this application;
FIG. 12 is a schematic diagram of a structure of another cell handover apparatus according to an embodiment of this application;
FIG. 13 is a schematic diagram of a structure of a terminal device according to an embodiment of this application;
FIG. 14 is a schematic diagram of a structure of a network device according to an embodiment of this application; and
FIG. 15 is a schematic diagram of a structure of a chip according to an embodiment of this application.

## DESCRIPTION OF EMBODIMENTS

The following describes technical solutions of this application with reference to accompanying drawings.

In the following, some terms in this application are explained and described, to facilitate understanding of the terms for a person skilled in the art.

1. Cell reselection (cell reselection)

Cell reselection is a process in which a terminal device selects the best cell to provide a service signal by monitoring signal qualities of neighboring cells and a current serving cell in an idle mode.

A cell reselection process may include the following steps:

A1: The terminal device measures a current serving cell and neighboring cells (including an intra-frequency cell, an inter-frequency cell, and an inter-RAT cell) according to a measurement starting criterion.

Measurement starting criterion: Two parameters, namely, a cell priority of a neighboring cell and a signal quality of the current serving cell may be considered to determine whether to start measurement on the neighboring cell. If the cell priority of the neighboring cell is higher than that of the current serving cell, the terminal device unconditionally starts measurement on the neighboring cell. If the cell priority of the neighboring cell is lower than or equal to that of the current serving cell, the terminal device may measure the signal quality of the current serving cell, and compare the signal quality of the current serving cell with a quality threshold. If the signal quality of the current serving cell is higher than the quality threshold, the terminal device may not measure the neighboring cell. If the signal quality of the current serving cell is not higher than the quality threshold, the terminal device measures the neighboring cell.

A2: The terminal device determines whether a signal of the neighboring cell meets a reselection criterion.

Optionally, a reselection criterion for inter-frequency and inter-RAT cells with different priorities is as follows.

A cell priority of an inter-frequency/inter-RAT (inter radio access technology, inter-RAT) neighboring cell is higher than that of the current serving cell, and the current serving cell includes threshServingLowQ in system information (an SIB 2), where threshServingLowQ is a reselection threshold corresponding to a neighboring cell whose cell priority is lower than that of the current serving cell. In this case, reselection is triggered when the following conditions are satisfied: The terminal device camps on the current serving cell for more than a preset duration (for example, 1 second); and the neighboring cell satisfies Squal > $\text{Thresh}_{X, HighQ}$ during a time interval ($T_{reselectionRAT}$), where Squal is a signal quality, and $\text{Thresh}_{X, HighQ}$ is a threshold of the signal quality.

If the current serving cell does not include threshServingLowQ in the system information (the SIB 2), reselection is triggered when the following conditions are satisfied: The neighboring cell satisfies Srxlev > $\text{Thresh}_{X, HighP}$ during a time interval ($T_{reselectionRAT}$), where Srxlev is signal energy, and $\text{Thresh}_{X, HighP}$ is a threshold of the signal energy; and the terminal device camps on the current serving cell for more than a preset duration (for example, 1 second).

$\text{Thresh}_{X, HighQ}$ and $\text{Thresh}_{X, HighP}$ are reselection thresholds corresponding to the neighboring cell whose cell priority is higher than that of the current serving cell, where X may represent a frequency, and each frequency has a corresponding threshold. $\text{Thresh}_{X, HighQ}$ and $\text{Thresh}_{X, HighP}$ of the inter-frequency neighboring cell may be obtained from an SIB 4, and $\text{Thresh}_{X, HighQ}$ and $\text{Thresh}_{X, HighP}$ of the inter-RAT neighboring cell may be obtained from an SIB 5.

Optionally, Srxlev and Squal may meet the following formulas, or Srxlev and Squal may be determined by using the following formulas:

$$\text{Srxlev} = Q_{rxlevmeas} - (Q_{rxlevmin} + Q_{rxlevminoffset}) - P_{compensation} - Qoffset_{temp};$$

and

$$\text{Squal} = Q_{qualmeas} - (Q_{qualmin} + Q_{qualminoffset}) - Qoffset_{temp}.$$

$Q_{rxlevmeas}$: A measured cell received signal level value, namely, a reference signal received power (reference signal received power, RSRP).

$Q_{rxlevmin}$: A minimum cell received level value broadcast in a system information block 1 (system information block 1, SIB1), which may be configured by a CellSel.QRxLevMin parameter.

$Q_{rxlevminoffset}$: An offset to a minimum cell received signal level value broadcast in the SIB 1, which may be configured by a CellSel.QRxLevMinOffset parameter.

$P_{compensation}$ = max($P_{Max}$ - UE Maximum Output Power, 0). $P_{Max}$: A maximum UE transmit power that is allowed by the cell and that is broadcast in the SIB 1, which may be configured by a CELL.UePowerMax parameter. UE Maximum Output Power: A maximum output power of the UE.

$Q_{qualmeas}$: A measured cell received signal quality, namely, a reference signal received quality (reference signal received quality, RSRQ).

$Q_{qualmin}$: A minimum cell received signal quality broadcast in the SIB 1, which may be configured by a Cell-Sel.QQualMin parameter. Whether a Qqualmin information element is delivered in the SIB 1 may depend on configuration of CellResel.ThrshServLowQCfgInd and CellSel.QQualMin: When a value of CellSel.QQualMin is not "0", CellResel.ThrshServLowQCfgInd may be configured to be "CFG (configured)" or "NOT_CFG (not configured)", and the information element is delivered in the SIB 1. When a value of CellSel.QQualMin is "0", CellResel.ThrshServLowQCfgInd can only be configured to be "NOT_CFG (not configured)", and the information element is not delivered in the SIB 1.

$Q_{qualminoffset}$: An offset to a minimum cell received signal quality broadcast in the SIB 1, which may be configured by a CellSel.QQualMinOffset parameter.

For details about Srxlev and Squal, refer to related description in section 5.2.3.2 of 3GPP TS38.304, and details are not further described.

If the cell priority of the inter-frequency/inter-RAT (inter radio access technology, inter-RAT) neighboring cell is equal to that of the current serving cell, the terminal device may perform cell reselection according to an R criterion. The R criterion calculates R (Rank) values for each neighboring cell and the current serving cell based on signal qualities of the cells, and then sorts neighboring cells and the current serving cell based on the R values. If an R value of a neighboring cell is greater than that of the current serving cell, the cell reselection criterion is satisfied. If a plurality of cells satisfy the criterion, the best cell is selected. If the neighboring cell always satisfies the R criterion during a time interval (Treselection$_{RAT}$), and the terminal device camps on the current serving cell for more than a preset duration (for example, 1 second), the terminal device starts reselection to the neighboring cell.

Optionally, an R value $R_s$ of the serving cell may meet the following formula, or the R value $R_s$ of the serving cell may be determined by using the following formula:

$$R_s = Q_{meas,s} + Q_{hyst} - Qoffset_{temp}.$$

$Q_{meas,s}$ is a signal quality of the current serving cell, and may be obtained by the terminal device through measurement.

$Q_{hyst}$ is a reselection hysteresis value of the current serving cell. A larger value of $Q_{hyst}$ leads to a larger border of the serving cell and therefore a lower probability of reselection to the neighboring cell.

Qoffset is a calculation parameter for the R criterion. In an intra-frequency reselection scenario, Qoffset may be equal to Qoffsetcell, and Qoffsetcell may be obtained from an SIB 3. In an inter-frequency reselection scenario, Qoffset may be equal to a sum of QoffsetCell and QoffsetFreq, and QoffsetCell and QoffsetFreq may be obtained from the SIB 4.

Qoffset$_{temp}$ is a calculation parameter for the R criterion, and may be obtained from the SIB 1.

An R value $R_n$ of the neighboring cell may meet the following formula, or the R value $R_n$ of the neighboring cell may be determined by using the following formula:

$$R_n = Q_{meas,n} - Qoffset - Qoffset_{temp}.$$

$Q_{meas,n}$ is a signal quality of the neighboring cell, and may be obtained by the terminal device through measurement.

For the R value $R_s$ of the serving cell and the R value $R_n$ of the neighboring cell, refer to related description in 3GPP TS38.304, and details are not further described.

If the cell priority of the inter-frequency/inter-RAT (inter radio access technology, inter-RAT) neighboring cell is lower than that of the current serving cell, and the current serving cell includes threshServingLowQ in the system information (the SIB 2), reselection is triggered when the following conditions are satisfied: A neighboring cell whose cell priority is higher than that of the serving cell does not meet a corresponding reselection criterion; a neighboring cell whose cell priority is equal to that of the serving cell does not meet a corresponding reselection criterion; the serving cell satisfies Squal < Thresh$_{Serving, LowQ}$; the neighboring cell satisfies Squal > Thresh$_{X, LowQ}$ during a time interval (Treselection$_{RAT}$); and the terminal device camps on the current serving cell for more than a preset duration (for example, 1 second).

If the current serving cell does not include threshServingLowQ in the system information (the SIB 2), cell reselection is triggered when the following conditions are satisfied: A neighboring cell whose cell priority is higher than that of the serving cell does not meet a corresponding reselection criterion; a neighboring cell whose priority is equal to that of the serving cell does not meet a corresponding reselection criterion; the serving cell satisfies Squal < Thresh$_{Serving, LowP}$; the neighboring cell satisfies Squal > Thresh$_{X, LowP}$ during a time interval (Treselection$_{RAT}$); and the terminal device camps on the current serving cell for more than a preset duration (for example, 1 second).

Thresh$_{Serving, LowQ}$ and Thresh$_{X, LowQ}$ are reselection thresholds corresponding to the neighboring cell whose cell priority is lower than that of the current serving cell, where X may represent a frequency, and each frequency has a corresponding threshold. Thresh$_{X, HighP}$ of the inter-frequency neighboring cell may be obtained from the SIB 4, and Thresh$_{X, HighP}$ of the inter-RAT neighboring cell may be obtained from the SIB 5.

A3: If the neighboring cell meets the reselection criterion, reselection is started, and the terminal device receives a system message of the neighboring cell. If there is no access restriction (for example, an operator may have some reserved cells or cells that have access restrictions), the terminal device camps on the neighboring cell. If the neighboring cell does not meet the reselection criterion, the terminal device still camps on the current serving cell.

2. NTN communication

NTN communication uses devices such as uncrewed aerial vehicles, high-altitude platform stations (high altitude platform station, HAPS), and satellites for networking, to provide services such as data transmission and voice communication for terminal devices. In addition, an NTN system may further include other aerial network devices. The network device in embodiments of this application is not limited to the foregoing examples.

Based on satellite altitudes, namely, satellite orbital heights, a satellite system may be classified into a high elliptical orbit (highly elliptical orbit, HEO) satellite, a geostationary earth orbit (geostationary earth orbit, GEO) satellite, a medium earth orbit (medium earth orbit, MEO) satellite, and a low earth orbit (low-earth orbit, LEO) satellite.

As an example, a mechanism in which the GEO satellite and the LEO satellite provide coverage for a cell is briefly described as follows.

(1) GEO satellite: Also referred to as a geostationary satellite, the GEO satellite travels at a same speed as an Earth's rotation system, and thus the satellite appears to be stationary to the ground. Accordingly, a cell of the GEO satellite is also stationary. A coverage area of the GEO satellite cell is large, typically with a diameter of 500 km.

(2). LEO satellite: The LEO satellite is a typical representative of many types of non-geostationary satellites. The LEO satellite moves fast relative to the ground, at a speed of about 7 km/s. Therefore, service coverage area provided by the LEO satellite also moves accordingly. There are two modes of cells cast by the LEO satellite to the ground: a fixed cell (fixed cell) and a moving cell (moving cell).

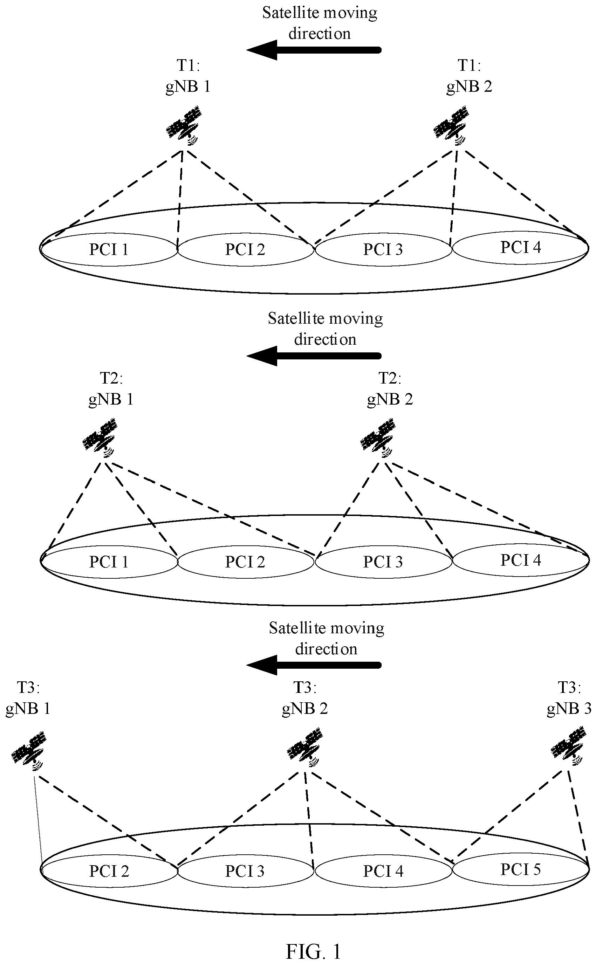

Fixed cell: A cell cast onto the ground is fixed relative to the ground. The LEO satellite above the ground covers a location on the ground by adjusting an antenna angle, and another LEO satellite covers the same location on the ground when the location is beyond coverage of the LEO satellite. As shown in FIG. 1, fixed cells are mapped as follows: Locations of the cells are fixed on the ground, and these cells are formed by adjusting beams of the moving satellite. For example, at a moment T1, an area shown in FIG. 1 is covered by a cell 1 and a cell 2 of a gNB 1, and a cell 3 and a cell 4 of a gNB 2. At a moment T2, although both the gNB 1 and the gNB 2 move leftward, beams of the gNB 1 and the gNB 2 may still be adjusted, and the area shown in FIG. 1 may still be covered by the cell 1 and the cell 2 of the gNB 1, and the cell 3 and the cell 4 of the gNB 2. At a moment T3, compared with the moment T1, the gNB 1 and the gNB 2 have moved far enough, the gNB 1 cannot provide a service for the area by adjusting a beam and then by using the cell 1, but a gNB 3 may provide a service for the area by using a cell 5, and the area shown in FIG. 1 may be covered by the cell 2 of the gNB 1, the cell 3 and the cell 4 of the gNB 2, and the cell 5 of the gNB 3. In such a cell mode, the satellite may form a fixed cell by adjusting the beam, and a beam deployment manner of the satellite may be referred to as a staring beam.

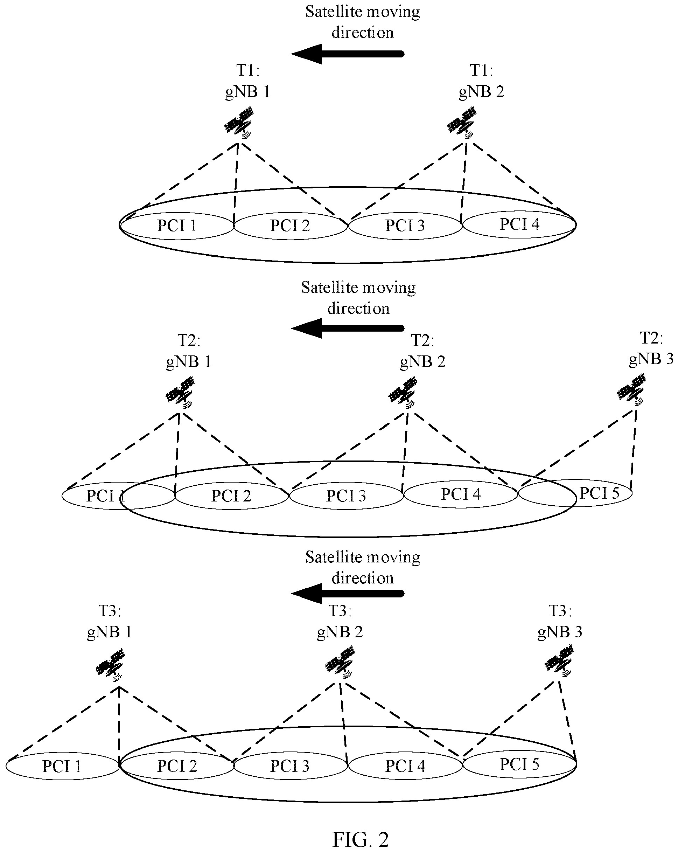

Moving cell: A cell cast onto the ground moves along with the LEO satellite. During the movement, an antenna direction of the LEO satellite remains unchanged. For example, an antenna of the LEO satellite keeps perpendicular to the ground. As shown in FIG. 2, an earth moving cell is mapped as follows: A moving satellite does not dynamically adjust its beam direction, instead a beam generated by the moving satellite moves on the ground accordingly with movement of the satellite. For example, at a moment T1, an area shown in FIG. 2 is covered by a cell 1 and a cell 2 of a gNB 1, and a cell 3 and a cell 4 of a gNB 2. At a moment T2, the area shown in FIG. 2 is covered by the cell 2 and a part of the cell 1 of the gNB 1, the cell 3 and the cell 4 of the gNB 2, and a part of a cell 5 of a gNB 3. At a moment T3, the area is covered by the cell 2 of the gNB 1, the cell 3 and the cell 4 of the gNB 2, and the cell 5 of the gNB 3. In such a cell mode, the moving satellite does not dynamically adjust its beam direction, and a beam deployment manner of the satellite may be referred to as a non-staring beam.

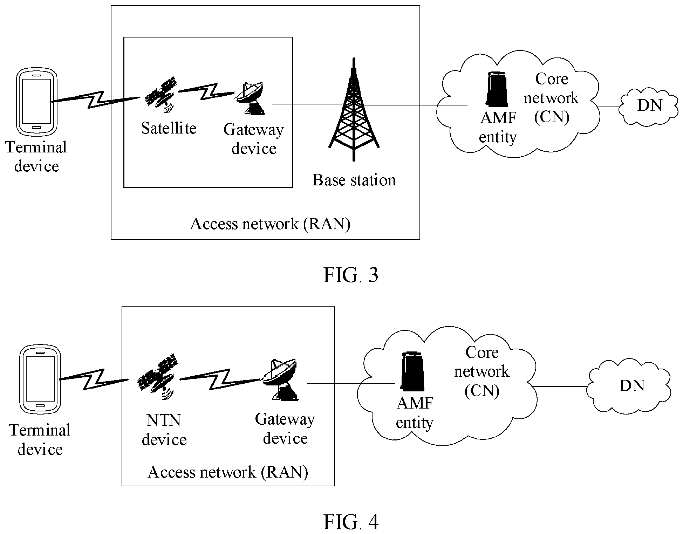

In an NTN system, an architecture of an NTN device is classified into two types. One is a transparent (transparent) forwarding architecture. In the architecture, the NTN device may be a relay (relay) or an amplifier, and may perform radio frequency filtering, amplification, and the like, to regenerate a signal. For example, the transparent forwarding architecture may be shown in FIG. 3. In the architecture shown in FIG. 3, the NTN device may further serve as a relay device between a terminal device and a base station, or serve as a remote radio unit (remote radio unit, RRU) of a base station. In this scenario, the NTN device may be responsible for Layer 1 (L1) relay and is configured to perform physical layer forwarding, which is invisible to a higher layer.

The other is a regenerative (regenerative) architecture. In the architecture, an NTN device may be used as a gNB, a distributed unit (distributed unit, DU), or a relay. Different from the relay in the first type, the relay herein further has a signal processing function, and is similar to an integrated access and backhaul (integrated access and backhaul, IAB) node or another relay node. When the NTN device is used as a gNB, a DU, an IAB, or another relay node, functions of the satellite is similar to functions of a common gNB, DU, IAB, or another relay node. For example, the regenerative architecture may be shown in FIG. 4. In the architecture shown in FIG. 4, the NTN device may serve as a base station to establish an N2 interface connection or an Ng interface connection to an access and mobility management function (access and mobility management function, AMF) entity in a core network, to provide a radio access service for a terminal device.

An NTN communication system provides seamless coverage for the terminal device by deploying all or some functions of an access network device on the NTN device (for example, a high-altitude platform station or a satellite). Because a non-terrestrial device is less affected by a natural disaster, reliability of the communication system can be improved.

Names of all nodes and messages in this application are merely names that are set for ease of description, and names in an actual network may be different. It should not be understood that names of various nodes and messages are limited in this application. On the contrary, any name having a function that is the same as or similar to a node or a message used in this application is considered as a method or an equivalent replacement of this application, and shall fall within the protection scope of this application. Details are not described below.

For example, the cell selection method provided in embodiments of this application may be applied to a communication system including an NTN device (for example, a satellite, an HAPS, or an uncrewed aerial vehicle) and a terrestrial access network device. The NTN device may have all or some functions of the access network device. A network architecture of the NTN device may be a transparent transmission architecture, or may be a regenerative architecture. Optionally, the network architecture may further include a gateway device. The gateway device is configured to forward a signal of the terrestrial access network device to the NTN device.

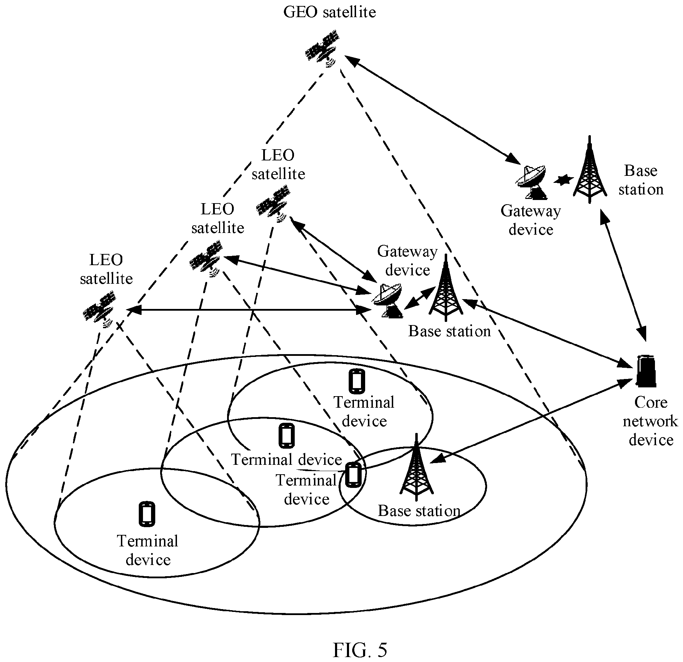

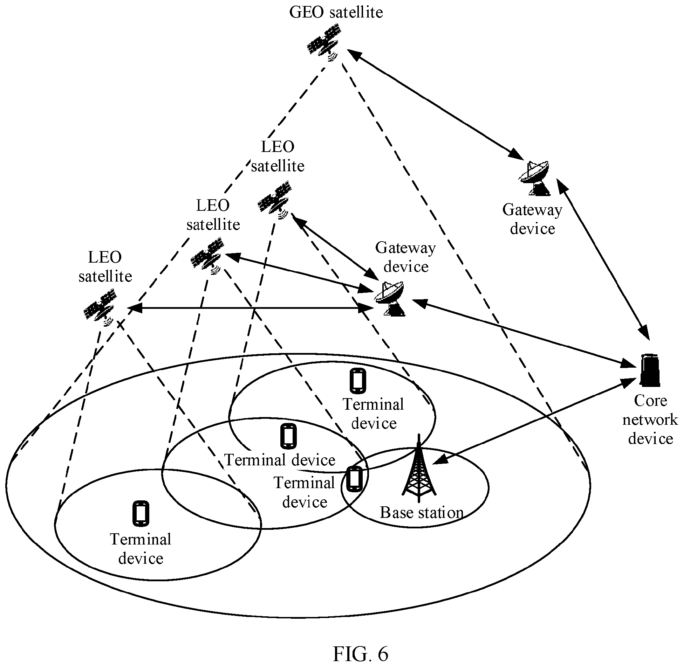

For example, FIG. 5 shows an example of a possible communication scenario. In the communication scenario shown in FIG. 5, an architecture of the NTN device may be a transparent transmission mode. FIG. 6 shows an example of another possible communication scenario. In the communication scenario shown in FIG. 6, an architecture of the NTN device may be a regenerative mode.

In an example, the NTN device and the terrestrial access network device may be interconnected through a common core network. Alternatively, the NTN device and the terrestrial access network device may also implement assistance and interconnection with higher time validity by using an interface defined between access network devices. In NR, an interface between access network devices may be referred to as an Xn interface, and an interface between the access network device and the core network may be referred to as an NG interface. The NTN device and the terrestrial access network device may communicate and collaborate with each other by using the Xn interface or the NG interface.

Optionally, a link between the NTN device and the terminal device may be referred to as a service link (service link), and a link between the NTN device and the gateway device may be referred to as a feeder link (feeder link).

Network elements in embodiments of this application include the network device and the terminal device.

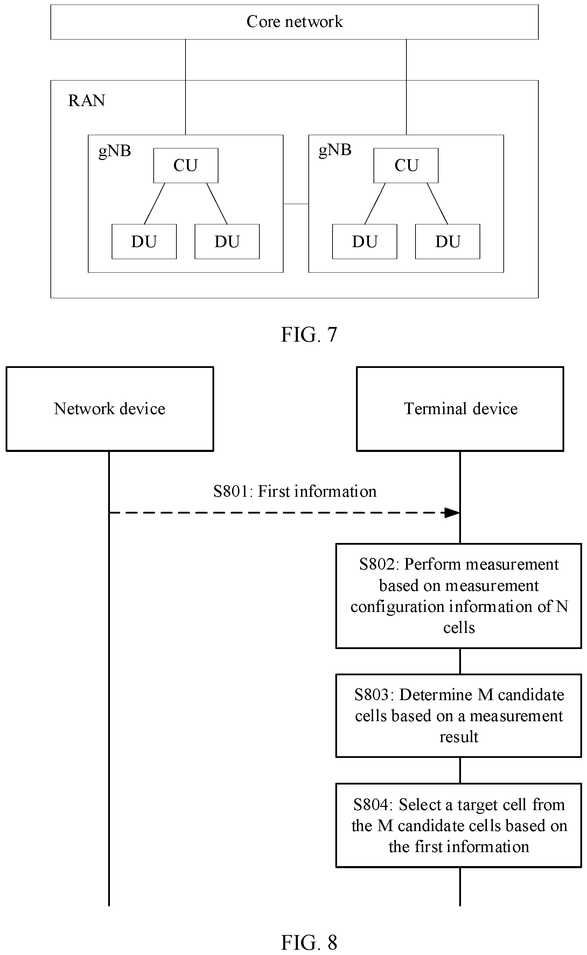

The network device may be an NTN device that has all or some functions of the access network device, or may also be a terrestrial access network device. The access network device is an entity for transmitting or receiving a signal on a network side, for example, a new generation NodeB (generation Node B, gNodeB). The access network device may be a device for communication with a mobile device. The access network device may be an AP in a wireless local area network (wireless local area networks, WLAN), an evolved NodeB (evolved NodeB, eNB or eNodeB) in long term evolution (long term evolution, LTE), a relay station, an access point, integrated access and backhaul (integrated access and backhaul, IAB), a vehicle-mounted device, a wearable device, an access network device in a future 5G network, an access network device in a future evolved public land mobile network (public land mobile network, PLMN), a gNodeB (gNB) in an NR system, or the like. In addition, in embodiments of this application, the access network device provides services for a cell, and the terminal device communicates with the access network device through a transmission resource (for example, a frequency domain resource or a spectrum resource) used by the cell. The access network device in embodiments of this application may be a central unit (central unit, CU) or a distributed unit (distributed unit, DU). Alternatively, for example, as shown in FIG. 7, the access network device may also include a CU and a DU. The CU and the DU may be physically split, or may be deployed together. This is not specifically limited in embodiments of this application. One CU may be connected to one DU, or a plurality of DUs may share one CU. This can reduce costs and facilitate network expansion. The CU and the DU may be split according to a protocol stack. In a possible manner, RRC, a service data adaptation protocol (service data adaptation protocol, SDAP) stack, and a packet data convergence protocol (packet data convergence protocol, PDCP) layer are deployed in the CU, and a radio link control (radio link control, RLC) layer, a media access control (media access control, MAC) layer, and a physical layer are deployed in the DU. In embodiments of this application, the foregoing method for splitting the protocol stack is not completely limited, and there may be another splitting method. The CU is connected to the DU through an F1 interface. The CU representing a gNB is connected to a core network through an Ng interface. The access network device in embodiments of this application may be a central unit control plane (CU-CP) node or a central unit user plane (CU-UP) node, or the network device may include a CU-CP and a CU-UP. The CU-CP is responsible for functions of a control plane, and mainly includes an RRC and a PDCP-C. The PDCP-C is mainly responsible for data encryption and decryption, integrity protection, data transmission, and the like on the control plane. The CU-UP is responsible for functions of a user plane, and mainly includes an SDAP and a PDCP-U. The SDAP is mainly responsible for processing data of the core network and mapping a flow to a bearer. The PDCP-U is mainly responsible for encryption and decryption, integrity protection, header compression, serial number maintenance, data transmission, and the like on a data plane. The CU-CP is connected to the CU-UP through an E1 interface. The CU-CP representing a gNB is connected to the core network through an Ng interface, and is connected to the DU through an F1-C (control plane). The CU-UP is connected to the DU through an F1-U (userplane). Certainly, in another possible implementation, the PDCP-C is implemented on the CU-UP. The access network device mentioned in embodiments of this application may be a device including a CU or a DU, a device including a CU and a DU, or a device including a control plane CU node (a CU-CP node), a user plane CU node (a CU-UP node), and a DU node. In addition, in another possible case, the access network device may be another apparatus that provides a wireless communication function for the terminal device. A specific technology and a specific device form used by the access network device are not limited in embodiments of this application. For ease of description, in embodiments of this application, an apparatus that provides a wireless communication function for the terminal device is referred to as an access network device.

The terminal device may be a device capable of receiving scheduling and indication information of the access network device (or the NTN device). The terminal device may be a device that provides users with voice and/or data connectivity, a handheld device with a wireless connection function, or another processing device connected to a wireless modem. The terminal device may communicate with one or more core networks or the internet by using a radio access network (for example, a radio access network, RAN). The terminal device may be a mobile terminal device, for example, a mobile phone (or referred to as a "cellular" phone, or a mobile phone (mobile phone)), a computer, or a data card. For example, the terminal device may be a portable, pocket-sized, handheld, computer builtin, or in-vehicle mobile apparatus that exchanges voice and/or data with the radio access network. For example, the terminal device may be a device such as a personal communication service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer with a wireless transceiver function. The terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the terminal device may be a wearable device and a next-generation communication system, for example, a terminal device in a 5G network, a terminal device in a future evolved PLMN network, or a terminal device in a new radio (new radio, NR) communication system. The terminal device may further be a terminal that communicates with the NTN device.

In addition, embodiments of this application are also applicable to another future-oriented communication technology. Network architectures and service scenarios described in this application are intended to describe technical solutions in this application more clearly, but are not intended to limit the technical solutions provided in this application. A person of ordinary skill in the art may know that as the network architectures evolve and a new service scenario emerges, the technical solutions provided in this application are also applicable to a similar technical problem.

It should be noted that a type and a criterion of the foregoing communication system are not limited in embodiments of this application. For example, the communication system may be a fifth-generation (The 5th Generation, 5G) communication system, a long term evolution (Long Term Evolution, LTE) communication system, or the like.

Embodiments of this application may be applied to a fourth-generation mobile communication system (the fourth generation, 4G), a 5G system, an NTN system, vehicle to everything (vehicle to everything, V2X), long-term evolution-vehicle (LTE-vehicle, LTE-V), vehicle to vehicle (vehicle to vehicle, V2V), internet of vehicles, machine type communication (Machine Type Communications, MTC), internet of things (internet of things, IoT), long-term evolution machine to machine (LTE-machine to machine, LTE-M), machine-to-machine (machine to machine, M2M), internet of things, or a future mobile communication system.

In satellite communication, a signal of a terrestrial base station connected to a satellite is forwarded by the satellite. After being forwarded by the satellite, the signal of the terrestrial base station connected to the satellite, different from a signal of a common terrestrial base station, has features such as wide coverage and a long latency. Such differences greatly affect services of UE, and further affect a decision such as cell reselection. For example, in a current reselection mechanism, a cell priority is bound to a frequency, and the cell priority is determined when a frequency of the cell is given. Whether to start measurement and a criterion for selecting a target cell after the measurement are closely related to the frequency of the cell. For example, in a cell reselection process, the terminal device measures a current serving cell and a neighboring cell according to a measurement starting criterion. Whether to start measurement on a neighboring cell depends on a cell priority of the neighboring cell. If the cell priority of the neighboring cell is higher than that of the current serving cell, the terminal device unconditionally starts measurement on the neighboring cell. If the cell priority of the neighboring cell is lower than or equal to that of the current serving cell, the terminal device may start measurement on the neighboring cell when a signal quality of the current serving cell is not higher than a quality threshold.

For another example, when the terminal device performs cell reselection, neighboring cells with different priorities have different reselection criteria. If the cell priority of the neighboring cell is higher than that of the current serving cell, the reselection criterion is: The terminal device camps on the current serving cell for more than a preset duration (for example, 1 second); and the neighboring cell satisfies $Squal > Thresh_{X, HighQ}$ during $T_{reselectionRAT}$. Alternatively, the reselection criterion is: The neighboring cell satisfies $Srxlev > Thresh_{X, HighP}$ during $T_{reselectionRAT}$, and the terminal device camps on the current serving cell for more than a preset duration (for example, 1 second).

If the cell priority of the neighboring cell is equal to that of the current serving cell, the reselection criterion may be: R (Rank) values for each neighboring cell and the current serving cell are calculated based on signal qualities of the cells, and then neighboring cells and the current serving cell are sorted based on the R values; if an R value of a neighboring cell is greater than that of the current serving cell, the cell reselection criterion is satisfied; and if a plurality of cells satisfy the criterion, the best cell is selected. If the neighboring cell always satisfies the R criterion during a time interval (Treselection$_{RAT}$), and the terminal device camps on the current serving cell for more than a preset duration (for example, 1 second), the terminal device starts reselection to the neighboring cell.

If the cell priority of the neighboring cell is lower than that of the current serving cell, the reselection criterion is: A neighboring cell whose cell priority is higher than that of the serving cell does not meet a corresponding reselection criterion; a neighboring cell whose cell priority is equal to that of the serving cell does not meet a corresponding reselection criterion; the serving cell satisfies Squal < Thresh$_{Serving, LowQ}$; the neighboring cell satisfies Squal > Thresh$_{X, LowQ}$ during a time interval (Treselection$_{RAT}$); and the terminal device camps on the current serving cell for more than a preset duration (for example, 1 second). Alternatively, the reselection criterion is: A neighboring cell whose cell priority is higher than that of the serving cell does not meet a corresponding reselection criterion; a neighboring cell whose priority is equal to that of the serving cell does not meet a corresponding reselection criterion; the serving cell satisfies Squal < Thresh$_{Serving, LowP}$; the neighboring cell satisfies Squal > Thresh$_{X, LowP}$ during a time interval (Treselection$_{RAT}$); and the terminal device camps on the current serving cell for more than a preset duration (for example, 1 second).

In future communication development, cells at a same frequency may be provided by a plurality of forms of networks such as a GEO satellite, an LEO satellite, an HAPS, and a cellular network. Even if the cells are at the same frequency, capabilities of different types of networks, such as latencies, capacity densities, and handover/reselection frequencies, are different. For example, a cellular network is more stable than a satellite network. In the satellite network, the GEO satellite is expected to have a low throughput but a stable connection. The LEO satellite has a high throughput, but may have a low connection stability.

For example, latencies, capacity densities, and handover/reselection frequencies of networks of different network types and network architectures may be shown in Table 1.

**Table 1**

|  | Air interface latency | Capacity density | Handover/reselection frequency |
|---|---|---|---|
| Cellular | Low | High | Low |
| GEO (36,000 km) | High | Low | Low |
| LEO (300 to 1,500 km) Non-staring mode | Medium | Relatively low | High |
| LEO (300 to 1,500 km) Staring mode | Medium | Medium to relatively high | Medium |
| HAPS (20 to 50 km) | Relatively low Air interface latency | Medium to relatively Capacity density high | Relatively low Handover/ reselection frequency |

Different services have different network requirements. Therefore, frequency-based priority rules cannot support measurement and camping priority management on the satellite network. For example, when a service type of the terminal device is a latency-sensitive communication service, the terminal device may select a cell covered by a satellite, as a target cell according to a priority configuration of the cell. Consequently, communication quality is poor, and user experience is compromised.

In view of this, embodiments of this application provides a cell selection method and an apparatus, to resolve a problem that communication quality is poor because a terminal device may select an inappropriate cell when selecting a target cell based on a priority configuration of a frequency of a cell. The method and the apparatus are based on a same inventive concept. Because principles of the method and the apparatus for resolving a problem are similar, mutual reference may be made between implementation of the apparatus and implementation of the method, and repeated descriptions are omitted.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or similar expressions refer to any combination of these items, including any combination of single items or a plurality of items. For example, at least one of a, b, or c may indicate a, b, c, a and b, a and c, b and c, or a, b, and c, where a, b, and c may be singular or plural.

It should be understood that, in description of this application, terms such as "first" and "second" are merely used for a purpose of distinguishing for description, and should not be construed as indicating or implying relative importance or construed as indicating or implying a sequence.

The following specifically describes a cell selection method provided in this application with reference to the accompanying drawings.

Embodiment 1: FIG. 8 shows a cell selection method according to an embodiment of this application. The cell selection method provided in this application may be applied to a cell reselection scenario, or may be applied to a cell handover scenario. The following uses the cell reselection scenario as an example for description. It should be understood that a manner of determining a target cell based on information about a network type of a cell in the cell handover scenario is similar to a manner of determining a target cell based on information about a network type of a cell in the cell reselection scenario. The cell selection method may include the following steps.

S801: A first network device sends first information to a terminal device, where the first information includes information about a network type of at least one cell, and information about a network type of a first cell in the at least one cell indicates that the first cell is a terrestrial network (for example, a cellular network), a GEO satellite network, an MEO satellite network, an LEO satellite network, or an HAPS network. The network device may be a network device corresponding to a serving cell of the terminal device. Accordingly, the terminal device receives the first information from the network device corresponding to the serving cell.

Optionally, the first network device may be the network device corresponding to the serving cell of the terminal device.

In an implementation, the terminal device in a connected state may receive radio resource control (radio resource control, RRC) signaling or a system information block (system information block, SIB) sent by the first network device, to obtain the first information.

In another implementation, the terminal device in a non-connected state may obtain the first information by receiving an RRC release (RRC Release) message sent by the first network device.

In still another implementation, the terminal device may alternatively obtain the first information by reading a broadcast message of a newly camped-on cell.

Optionally, a network of a cell in this embodiment of this application may be but is not limited to a terrestrial network (for example, a cellular network), a GEO satellite network, an MEO satellite network, an LEO satellite network, an HAPS network, and the like, and may further include another network, for example, a network that appears in future communication development. It may be understood that the network is merely an example for description, and a type of the network is not specifically limited.

For example, the information about the network type of the cell may indicate the network of the cell in an explicit manner. For example, the information about the network type may include network information, and the network information may indicate different networks by using different values. For example, the information about the network type may be shown in Table 2.

**Table 2**

| Network information | Network |
| --- | --- |
| 011 | GEO satellite network |
| 010 | LEO satellite network |
| 001 | HAPS network |
| 000 | Cellular network |
| ... | ... |

It should be understood that Table 2 is merely an example for description, and this embodiment of this application does not specifically limit a quantity of bits included in the network information, a correspondence between a value of the network information and the network, and the like.

In an example, the information about the network type of the cell may include a cell identifier of the cell and network information of the cell. Network information shown in Table 2 is used as an example, and the first information may be shown in Table 3.

**Table 3**

| Cell identifier | Network information | Network |
|---|---|---|
| Cell ID #1 | 011 | GEO satellite network |
| Cell ID #2 | 010 | LEO satellite network |
| Cell ID #3 | 001 | HAPS network |
| Cell ID #4 | 000 | Cellular network |
| Cell ID #5 | 010 | LEO satellite network |
| Cell ID #6 | 011 | GEO satellite network |
|  | ... | ... |

Optionally, the information about the network type of the cell may include orbit information of the network device corresponding to the cell, for example, an orbital height. In an example, the network type of the cell may be further classified according to the orbit information. For example, the network type of the cell may be further classified according to an orbital height of the network device. For example, the LEO satellite network may be further classified into a 300-km LEO satellite network, a 600-km LEO satellite network, and a 1,500-km LEO satellite network according to heights, and the HAPS network may be further classified into a 10-km HAPS network, a 20-km HAPS network, and the like according to heights. NTN devices with different orbital heights may have different latencies, processing capabilities, and the like. The network type is further classified according to the orbit information, so that the terminal device can choose to hand over to a cell that meets the requirement.

For example, an orbital height is used as an example. The orbit information may indicate an orbital height of a cell in an explicit manner. For example, the orbit information may indicate different orbital heights by using different values. For example, the orbit information may be shown in Table 4.

**Table 4**

| Orbit information | Orbital height |
|---|---|
| 000 | 300 km |
| 001 | 600 km |
| 010 | 1,500 km |
| 011 | 10 km |
| 100 | 20 km |
| ... | ... |

It should be understood that Table 4 is merely an example for description, and this embodiment of this application does not specifically limit a quantity of bits included in the orbit information, a correspondence between a value of the orbit information and the orbital height, and the like.

The information about the network type of the cell may further include network architecture information of the network device corresponding to the cell. For example, the network architecture information may be used to indicate a network architecture of the network device. The network architecture may be classified into the following types: a regenerative architecture, a transparent transmission architecture, a regenerative satellite architecture including only a DU, and the like. It may be understood that a type of the network architecture is merely an example for description, and the type of the network architecture is not specifically limited. In an example, the network type of the cell may be further classified according to the network architecture. For example, the LEO satellite network may be further classified into an LEO satellite network with the regenerative architecture, an LEO satellite network with the transparent transmission architecture, an LEO satellite network with the regenerative satellite architecture including only a DU, and the like based on the network architecture. For satellites at a same orbital height, different network architectures correspond to different latencies and processing capabilities. For example, the regenerative architecture has a lower latency. The network type is further classified according to the network architectures, so that the terminal device can choose to hand over to a cell that meets the requirement.

For example, the network architecture information may indicate a network architecture of the network device corresponding to the cell in an explicit manner. For example, the network architecture information may indicate different network architectures by using different values. For example, the network architecture information may be shown in Table 5.

**Table 5**

| Value of network architecture information | Network architecture |
|---|---|
| 00 | Regenerative architecture |
| 01 | Transparent transmission architecture |
| 10 | Regenerative satellite architecture including only a DU |
| ... | ... |

It should be understood that Table 5 is merely an example for description, and this embodiment of this application does not specifically limit a quantity of bits included in the network architecture information, a correspondence between a value of the network architecture information and the network architecture, and the like.

The information about the network type of the cell may further include beam information of the cell, and the beam information indicates a beam deployment manner. For example, the beam deployment manner may be classified into a staring beam and a non-staring beam. In an example, the network type of the cell may be further classified according to the beam deployment manner. For example, the LEO satellite network may be further classified into an LEO satellite network with the staring beam and an LEO satellite network with the non-staring beam according to the beam deployment manner. A staring beam means a low handover frequency. The network type is further classified according to the beam deployment manner, so that the terminal device can choose to hand over to a cell that meets the requirement.

For example, the beam information may indicate a beam deployment manner of the network device corresponding to the cell in an explicit manner. For example, the beam information may indicate different beam deployment manners by using different values. For example, the beam information may be shown in Table 6.

**Table 6**

| Value of beam information | Beam deployment manner |
|---|---|
| 0 | Staring beam |
| 1 | Non-staring beam |

It should be understood that Table 6 is merely an example for description, and this embodiment of this application does not specifically limit a quantity of bits included in the beam information, a correspondence between a value of the beam information and the beam deployment manner, and the like.

Optionally, the network type of the cell may be classified according to the networks, orbital heights, network architectures, and beam deployment manners. For example, as shown in Table 7, the information about the network type of the cell may include network information, orbit information, network architecture information, and beam information of at least one cell.

**Table 7**

| Cell identifier | Information about a network type | | | | Network type |
|---|---|---|---|---|---|
| | Network information | Orbit information | Network architecture information | Beam information | |
| Cell ID #1 | 011 | N/A | 01 | N/A | GEO satellite network |
| Cell ID #2 | 010 | 000 | 00 | 0 | 300-km LEO satellite network with a regenerative architecture and with a staring beam |
| Cell ID #3 | 010 | 010 | 01 | 0 | 1,500-km LEO satellite network with a regenerative architecture and with a staring beam |

(continued)

| Cell identifier | Information about a network type | | | | Network type |
|---|---|---|---|---|---|
| | Network information | Orbit information | Network architecture information | Beam information | |
| Cell ID#4 | 001 | 011 | 01 | 1 | 10-km HAPS network with a regenerative architecture and with a non-staring beam |
| Cell ID#5 | 000 | N/A | N/A | N/A | Cellular network |

Alternatively, the information about the network type of the cell may include at least one of the network information, the orbit information, the network architecture information, and the beam information. The terminal device may obtain other information in the network information, the orbit information, the network architecture information, and the beam information in another manner. For example, the information about the network type of the cell may include the network information, the network architecture information, and the beam information, and the terminal device may obtain the orbit information of the network device of the cell by using ephemeris information.

The network type of the cell may be classified according to at least one piece of the foregoing information about the networks, the orbital heights, the network architectures, and the beam deployment manners. For example, the network type of the cell may be classified according to the networks, the orbital heights, and the beam deployment manners.

The network type of the cell may be further classified according to other network deployment statuses, which are not listed one by one herein.

In a possible implementation, the first network device may obtain the first information from a core network device connected to the first network device.

Different network devices may be connected to a same core network device, or may be connected to different core network devices. For a cell of a second network device, the second network device and the first network device are connected to a same core network device, and the core network device connected to the first network device may obtain, from the second network device, information about a network type of the cell of the second network device. For a cell of a third network device, the third network device and the first network device are connected to different core network devices, and a core network device connected to the first network device may obtain, from a core network device connected to the third network device, information about a network type of the cell of the third network device.

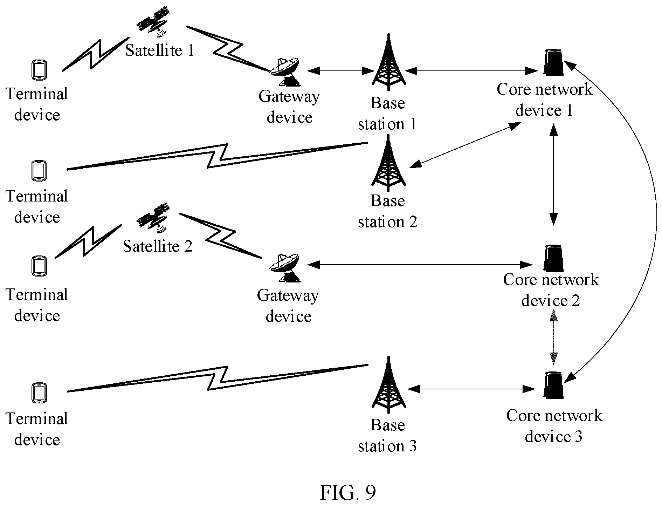

For example, as shown in FIG. 9, assuming that the first network device is a satellite 1, the first network device may request, from a core network device 1, information about network types of a cell of a base station 2, a cell of a satellite 2, and a cell of a base station 3, and the core network device 1 may obtain the information about the network type of the cell of the base station 2 from the base station 2, obtain the information about the network type of the cell of the satellite 2 from a core network device 2, and obtain the information about the cell of the base station 3 from a core network device 3.

For example, the first network device may request, from the connected core network device, information about network types of a cell covered by the first network device and a surrounding cell, and may further request information about a service type of a terminal device served by the first network device. Alternatively, the core network device connected to the first network device may actively send, to the first network device, information about network types of a cell covered by the first network device and a surrounding cell, and may further send information about a service type of a terminal device served by the first network device.

Optionally, the core network device connected to the first network device may determine, based on deployment information of the first network device, the cell covered by the first network device and the surrounding cell. For example, if the first network device is a cellular network access network device, the deployment information of the first network device may be a geographical location of the first network device. If the first network device is an NTN device, the deployment information of the first network device may be a movement location, a movement rule, and the like of the first network device.

If the first network device is a non-geostationary orbit satellite moving at a high speed, the information about the network types of the cell covered by the first network device and the surrounding cell may change with time. Therefore, the core network device connected to the first network device may update, at a frequency higher than that of a core network device in a cellular network, the information about the network types of the cell covered by the first network device and the surrounding cell.

The information about the network type of the cell covered by the first network device and the information about the network type of the surrounding cell are closely related to a deployment status of the first network device. The deployment status of the first network device and a change rule of the deployment status may be pre-stored in the core network device connected to the first network device. Optionally, the deployment status of the first network device and the change rule of the deployment status may be based on a specific triggering condition (for example, at preset intervals), and when the triggering condition takes effect, updated information about the network type of the cell covered by the first network device and the network type of the surrounding cell is sent to the first network device.

Optionally, different core network devices may belong to different operators. Therefore, operators may design a shared authentication mechanism at a core network layer. For example, a rule may be set, so that when a core network device of a satellite operator requests information about a network type of a cell from a core network device of a cellular network, the core network device of the cellular network may send, to the core network device of the satellite operator, the information about the network type of the cell requested by the core network device of the satellite operator. In this way, the cellular network can smoothly undertake a service from the satellite network, thereby improving service stability.

In an implementation, the network device may send, to the terminal device, configuration information related to cell reselection, where the configuration information related to cell reselection may include measurement configuration information (for example, a frequency and a cell priority) of at least one cell.

S802: The terminal device performs measurement based on the measurement configuration information of N cells, where N is an integer greater than 0.

In an implementation, the terminal device may determine, based on a cell priority of a cell, whether to start measurement on the cell, where the cell priority is bound to a frequency. For example, if the cell priority of the cell is higher than that of a current serving cell, the terminal device unconditionally starts measurement on the cell. If the cell priority of the cell is lower than or equal to that of the current serving cell, the terminal device may measure a signal quality of the current serving cell, and compare the signal quality of the current serving cell with a quality threshold. If the signal quality of the current serving cell is higher than the quality threshold, the terminal device may not measure the cell. If the signal quality of the current serving cell is not higher than the quality threshold, the terminal device measures the cell.

In another implementation, a network type of each cell may correspond to a priority, and the terminal device may determine, based on a priority of a network type of a cell, whether to start measurement on the cell. For example, if the priority of the network type of the cell is higher than that of a network type of the current serving cell, the terminal device may unconditionally start measurement on the cell. If the priority of the network type of the cell is lower than or equal to that of the network type of the current serving cell, the terminal device may start measurement on the cell when the current serving cell satisfies a preset condition.

In an example, the preset condition may be that the signal quality of the current serving cell is less than the quality threshold. To be specific, if the priority of the network type of the cell is lower than or equal to the priority of the network type of the current serving cell, if the signal quality of the current serving cell is less than the quality threshold, the terminal device may start measurement on the cell; or if the signal quality of the current serving cell is not less than the quality threshold, the terminal device may not start measurement on the cell.

In still another implementation, the terminal device may determine, based on the priority of the network type of the cell and the cell priority, whether to start measurement on the cell.

For example, if the cell priority of the cell is higher than that of the current serving cell, if the priority of the network type of the cell is higher than that of the network type of the current serving cell, the terminal device may unconditionally start measurement on the cell; or if the priority of the network type of the cell is lower than or equal to that of the network type of the current serving cell, the terminal device may start measurement on the cell when the signal quality of the current serving cell is less than the quality threshold.

If the cell priority of the cell is lower than or equal to that of the current serving cell, the terminal device may measure the signal quality of the current serving cell, and compare the signal quality of the current serving cell with the quality threshold. If the signal quality of the current serving cell is higher than the quality threshold, the terminal device may not measure the cell. If the signal quality of the current serving cell is not higher than the quality threshold, the terminal device measures the cell.

Alternatively, if the priority of the network type of the cell is higher than that of the network type of the current serving cell, if the cell priority of the cell is higher than that of the current serving cell, the terminal device may unconditionally start measurement on the cell; or if the cell priority of the cell is lower than or equal to that of the current serving cell, the terminal device may start measurement on the cell when the signal quality of the current serving cell is less than the quality threshold.

If the priority of the network type of the cell is lower than or equal to that of the network type of the current serving cell, the terminal device may measure the signal quality of the current serving cell, and compare the signal quality of the current serving cell with the quality threshold. If the signal quality of the current serving cell is higher than the quality threshold, the terminal device may not measure the cell. If the signal quality of the current serving cell is not higher than the quality threshold, the terminal device measures the cell.

S803: The terminal device determines M candidate cells based on a measurement result, where M is an integer greater than 0 and less than N.

For example, for a cell whose cell priority is higher than that of the current serving cell, if signal energy of the cell is greater than a first threshold of the signal energy, or a signal quality of the cell is greater than a second threshold of the signal quality, the terminal device may select the cell as a candidate cell.

Optionally, the signal energy of the cell may meet the following formula, or the signal energy of the cell may be determined by using the following formula:

$$Srxlev = Q_{rxlevmeas} - (Q_{rxlevmin} + Q_{rxlevminoffset}) - P_{compensation} - Qoffset_{temp}.$$

Srxlev is signal energy of a cell. For $Q_{rxlevmeas}$, $Q_{rxlevmin}$, $Q_{rxlevminoffset}$, $P_{compensation}$ and $Qoffset_{temp}$, refer to related description in step A2. Details are not described herein again.

The signal quality of the cell may meet the following formula, or the signal quality of the cell may be determined by using the following formula:

$$Squal = Q_{qualmeas} - (Q_{qualmin} + Q_{qualminoffset}) - Qoffset_{temp}.$$

Squal is a signal quality of a cell. For $Q_{qualmeas}$, $Q_{qualmin}$, $Q_{qualminoffset}$ and $Qoffset_{temp}$, refer to related description in step A2. Details are not described herein again.

For a cell whose cell priority is the same as that of the current serving cell, the terminal device may perform cell reselection according to an R criterion. For the R criterion, refer to related description in step A2. Details are not described herein again.

For a cell whose cell priority is lower than that of the current serving cell, if signal energy of the cell is greater than a third threshold of the signal energy, or a signal quality of the cell is greater than a fourth threshold of the signal quality, the terminal device may select the cell as a candidate cell.

S804: The terminal device selects a target cell from the M candidate cells based on the first information.

It should be noted that step S801 is not a mandatory step. In specific implementation, the terminal device may alternatively obtain the first information in another manner. For example, the terminal device may determine movement information of the network device based on ephemeris information of the network device corresponding to the cell, such as a current location and a moving speed, and may determine the network type of the cell based on the movement information of the network device corresponding to the cell. Optionally, the terminal device may obtain a network type of a currently camped-on cell (namely, the serving cell) in this manner. In this way, the network device does not need to additionally indicate the network type of the currently camped-on cell, so that indication overheads can be reduced.

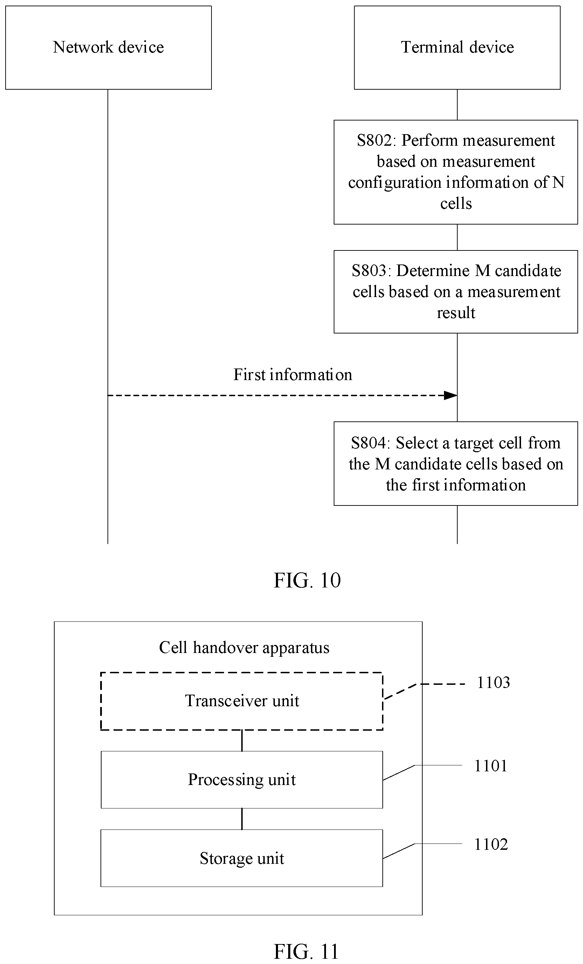

Alternatively, the terminal device may obtain the first information from a network device corresponding to a candidate cell. For example, after step S803, the network device corresponding to the candidate cell may send the first information, and accordingly, the terminal device may receive the first information, as shown in FIG. 10. In this manner, the terminal device obtains the first information from the candidate cell only when determining to camp on the cell. In this way, configuration information that needs to be stored by the terminal device can be reduced, thereby reducing storage overheads of the terminal device. In addition, in this way, a real-time status of a network can be more accurately reflected. A manner in which the network device corresponding to the candidate cell obtains the first information is similar to a manner in which the network device corresponding to the serving cell obtains the first information. For details, refer to related description in step 5801. Details are not described herein again.

Alternatively, the terminal device may obtain some information of the first information from the network device corresponding to the serving cell in step S801, and obtain the other information of the first information from the network device corresponding to the candidate cell after step S803.

Different types of networks have different communication quality. For example, a cellular network has better stability, and a 300-km LEO satellite network has a lower latency. In this embodiment of this application, when performing cell reselection, the terminal device may select a target cell based on a network type, so that the target cell may satisfy a service requirement of the terminal device. For example, when a service type of the terminal device is a communication service that has a high requirement for stability, the terminal device may preferentially select a cellular network cell with good stability. When the service type of the terminal device is a communication service that has a low requirement for stability, the terminal device may select a 300-km LEO satellite network cell or the like, so that a probability that the terminal device selects an inappropriate cell for reselection can be reduced, and user experience can be improved.

In an implementation, that the terminal device selects a target cell from the M candidate cells based on the first information includes: The terminal device selects the target cell from the M candidate cells according to the first information and a first selection rule, where the first selection rule is used to select the target cell, and the first selection rule includes a correspondence between at least one network type and a priority.

In an embodiment, the network device may determine the first selection rule corresponding to the service type based on the service type of the terminal device, and indicate the first selection rule to the terminal device. For example, the network device may send second information to the terminal device, where the second information indicates the first selection rule. According to the foregoing design, overheads of the terminal device can be reduced.

Optionally, the second information may indicate the selection rule in an explicit manner. For example, the second information may indicate different selection rules by using different values. For example, the second information may be shown in Table 8.

**Table 8**

| Second information | Selection rule | Applicable service type |
|---|---|---|
| 00 | Selection rule 1 | Service type 1 |
| 01 | Selection rule 2 | Service type 2 |
| 10 | Selection rule 3 | Service type 3 |
| 11 | Selection rule 4 | Service type 4 |
| ... | ... | ... |

In another embodiment, the terminal device may alternatively select the first selection rule corresponding to the service type from the at least one preconfigured selection rule according to the service type of the terminal device, where one selection rule includes a correspondence between at least one network type and a priority. For example, the at least one selection rule may be preconfigured by the network device for the terminal device, or may be specified in a protocol. Optionally, the foregoing design may be applied to uplink-dominant services, for example, some IoT services. According to the foregoing design, signaling overheads of the network device can be reduced.

In still another embodiment, the terminal device may use the preconfigured first selection rule. According to the foregoing design, a selection rule for use may be preconfigured for a terminal device with a stable service type, so that configuration signaling can be reduced.

For example, in this embodiment of this application, network types of cells may alternatively be classified according to network information, orbit information, network architecture information, and beam information, and then priorities are jointly sorted. For example, priorities of network types such as a cellular network, a 300-km LEO satellite network with a regenerative architecture and with a staring beam, a 600-km LEO satellite network with a transparent transmission architecture and with a staring beam, and a GEO are jointly sorted. For example, priority sorting may be shown in Table 9.

**Table 9**

| Priority | Network type |
|---|---|
| 1 | Cellular network |
| 2 | 300-km LEO satellite network with a regenerative architecture and with a staring beam |
| 3 | 300-km LEO satellite network with a regenerative architecture and with a non-staring beam |
| 4 | GEO with a regenerative architecture and with a staring beam |
| ... | ... |

It should be understood that Table 9 is merely an example for description, and this embodiment of this application does not specifically limit a correspondence between a network type and a priority, and the like.

Alternatively, the network types of the cells may be classified for the first time based on networks and sorted by priorities. For example, a cellular network, an LEO satellite network, a GEO satellite network, an MEO satellite network, and the like are sorted by priorities. Then, each type of network may further be classified based on orbital heights and sorted by priorities. For example, for an LEO satellite network, a 300-km LEO satellite network, a 600-km LEO satellite network, a 1,500-km LEO satellite network, and the like are sorted by priorities. Then, the network types may further be classified based on network architectures and sorted by priorities. For example, for a 300-km LEO satellite network, a 300-km LEO satellite network with a regenerative architecture, a 300-km LEO satellite network with a transparent transmission architecture, a 300-km LEO satellite network with a regenerative architecture including only a DU, and the like are sorted by priorities. Then, the network types may further be classified based on beam deployment manners and sorted by priorities. For example, priority sorting may be shown in Table 10.

**Table 10**

| Priority | Network | Priority | Orbital height | Priority | Network structure | Priority | Beam deployment manner |
|---|---|---|---|---|---|---|---|
| 1 | Cellular network | N/A | N/A | N/A | N/A | N/A | N/A |
| 2 | LEO satellite network | 1 | 300 km | 1 | Regenerative architecture | 1 | Staring beam |
| | | | | | | 2 | Non-staring beam |
| | | | | 2 | Transparent transmission architecture | 1 | Staring beam |
| | | | | | | 2 | Non-staring beam |
| | | | | ... | ... | ... | ... |
| | | 2 | 600 km | 1 | Regenerative architecture | 1 | Staring beam |
| | | | | | | 2 | Non-staring beam |
| | | | | 2 | Transparent transmission architecture | 1 | Staring beam |
| | | | | | | 2 | Non-staring beam |
| | | | | ... | ... | ... | ... |
| | | ... | ... | ... | ... | ... | ... |
| 3 | GEO satellite network | ... | ... | ... | ... | ... | ... |
| ... | ... | ... | ... | ... | ... | ... | ... |

It should be understood that Table 10 is merely an example for description, and this embodiment of this application does not specifically limit a correspondence between a network type and a priority, and the like.

For example, if a service corresponding to the service type of the terminal device has a high requirement for stability, a network type with better stability in the first selection rule corresponds to a higher priority. For example, a priority of a cellular network > a priority of a GEO satellite network > a priority of a LEO satellite network > .... According to the foregoing design, if a service corresponding to the service type of the terminal device has a high requirement for stability, the terminal device may preferentially select a candidate cell of a cellular network as the target cell.

If a service corresponding to the service type of the terminal device has high requirements for a throughput and a latency, in the first selection rule, a network type with a larger throughput and a lower latency corresponds to a higher priority. For example, a priority of a cellular network > a priority of a 300-km LEO satellite network > a priority of a 600-km LEO satellite network > a priority of a GEO satellite network > .... For another example, a priority of a cellular network > a priority of an HAPS network > a priority of a 300-km LEO satellite network > a priority of a GEO satellite network > .... According to the foregoing design, if a service corresponding to the service type of the terminal device has high requirements for a throughput and a latency, the terminal device may preferentially select a candidate cell of a cellular network as the target cell.

For example, the service type of the terminal device may include but is not limited to: an IoT service, an enhanced mobile broadband (enhanced mobile broadband, eMBB) service, an ultra reliable and low latency communication (ultra reliable and low latency communications, URLLC) service, massive machine type communication (massive machine type communications, mMTC), and the like. Optionally, each service type may further be classified. For example, the IoT service may further be classified into a stability-preferred IoT service, a monitoring IoT service, and the like. The monitoring IoT service has a high requirement for a throughput. The eMBB service may further include an integrated access and backhaul (Integrated Access Backhaul, IAB) type and a non-IAB type. Devices that carry IAB services have high processing capabilities and are often powered by continuous power supply.

Optionally, the service type of the terminal device may be preconfigured. For example, for a terminal device with a fixed application scenario, the service type of the terminal device may be preconfigured.

Alternatively, the network device may indicate the service type to the terminal device. For example, for a terminal device whose usage scenario changes, the network device may indicate the service type of the terminal device by using third information.

For example, as shown in Table 11, the third information may indicate a service type in an explicit manner.

**Table 11**

| Third information | Service type |
| --- | --- |
| 00 | IoT service |
| 01 | eMBB service |
| ... | ... |

Alternatively, the terminal device may determine the service type based on a service status. Optionally, after determining the service type, the terminal device may report the determined service type to the network device.

Further, if the service type reported by the terminal device is inconsistent with an actual service of the terminal device, the network device may indicate the terminal device to adjust the service type, and the network device may indicate a service type corresponding to the actual service to the terminal device. If the service type reported by the terminal device is consistent with the actual service of the terminal device, the network device may not perform configuration, so that some configuration signaling can be reduced.

Different types of networks have different communication quality. For example, a cellular network has better stability, and a 300-km LEO satellite network has a lower latency. In this embodiment of this application, when performing cell reselection, the terminal device may select a target cell based on a network type and a service type of the terminal device, so that the target cell may satisfy a service requirement of the terminal device. For example, when a service type of the terminal device is a communication service that has a high requirement for stability, the terminal device may preferentially select a cellular network cell with good stability. When the service type of the terminal device is a communication service that has a low requirement for stability, the terminal device may select a 300-km LEO satellite network cell or the like, so that a probability that the terminal device selects an inappropriate cell for reselection can be reduced, and user experience can be improved.

Embodiment 2: An embodiment of this application provides another cell selection method. The method is similar to the cell selection method shown in FIG. 8, and a difference lies in that first information and a selection rule are different. For details of the another cell selection method provided in this embodiment of this application, refer to the cell selection method shown in FIG. 8. Details are not repeated.

In the cell selection method shown in FIG. 8, the first information may indicate a network deployment status of a cell. In the another cell selection method provided in this embodiment of this application, the first information may indicate a capability of a cell. For example, the first information may include information about a capability of at least one cell, and information about a capability of a first cell in the at least one cell indicates at least one of the following information: a network round-trip latency of the first cell, a total network capacity of the first cell, a remaining network capacity of the first cell, and a network handover frequency of the first cell. The network round-trip latency of the first cell includes one or more of the following parameters: an air interface round-trip latency from a terminal device accessing the first cell to a network device, where the air interface round-trip latency from the terminal device accessing the first cell to the network device may indicate air interface performance of the first cell; and a round-trip latency from the terminal device accessing the first cell to a routing device or a core network device, where the round-trip latency from the terminal device accessing the first cell to the routing module or the core network device may indicate end-to-end latency experience of the first cell.

The total network capacity of the first cell may include one or more of the following parameters: a maximum data throughput supported by the first cell, where if a network device corresponding to the first cell covers a cell, the total network capacity of the first cell may refer to a maximum data throughput supported by the network device corresponding to the first cell; a maximum data throughput supported by a unit area/space of the first cell, where if the network device corresponding to the first cell covers a cell, the total network capacity of the first cell may refer to a maximum data throughput supported by a unit area/space covered by the network device corresponding to the first cell; and a maximum single-user data throughput supported by the first cell, where if the network device corresponding to the first cell covers a cell, the total network capacity of the first cell may refer to a maximum single-user data throughput supported by the network device corresponding to the first cell.

The remaining network capacity of the first cell may include one or more of the following parameters: a remaining data throughput of the first cell, where if the network device corresponding to the first cell covers a cell, the remaining network capacity of the first cell may refer to a remaining data throughput of the network device corresponding to the first cell; a remaining data throughput of a unit area/space of the first cell, where if the network device corresponding to the first cell covers a cell, the remaining network capacity of the first cell may refer to a remaining data throughput of a unit area/space covered by the network device corresponding to the first cell; and a single-user remaining data throughput of the first cell, where if the network device corresponding to the first cell covers a cell, the remaining network capacity of the first cell may refer to a single-user remaining data throughput of the network device corresponding to the first cell.

The network handover frequency of the first cell may include one or more of the following parameters: a probability of cell handover and/or cell reselection of the first cell, which may be represented by using a quantitative indicator; a quantity of times of cell handover and/or cell reselection in a time period by the terminal device in the first cell; a probability of beam handover of the terminal device accessing the first cell; and a quantity of times of beam handover in a time period by the terminal device accessing the first cell.

In the another cell selection method provided in this embodiment of this application, information about a capability of a cell may include information about a network round-trip latency. The information about the network round-trip latency may indicate different network round-trip latencies by using different values. For example, the information about the network round-trip latency may be shown in Table 12.

**Table 12**

| Information about a network round-trip latency | Network round-trip latency | Network deployment |
|---|---|---|
| 000 | < 1 ms | Cellular |
| 001 | 1 to 3 ms | VLEO, and HAPS |
| 010 | 3 to 10 ms | 600-km LEO |
| 011 | 10 to 40 ms | 1,200-km LEO |
| 100 | 40 ms to 200 m | 20,000-km MEO |
| 101 | 200 to 540 ms | GEO |
| ... | ... | ... |

It should be understood that Table 12 is merely an example for description, and this embodiment of this application does not specifically limit a quantity of bits included in the information about the network round-trip latency, a correspondence between a value of the information about the network round-trip latency and the network round-trip latency, and the like.

The information about the capability of the cell may include information about a total network capacity. The information about the total network capacity may indicate different total network capacities by using different values. For example, the information about the total network capacity may be shown in Table 13.

**Table 13**

| Information about a total network capacity | Total network capacity | Network deployment |
|---|---|---|
| 00 | High capacity density | Cellular |
| 01 | Medium capacity density | LEO, and HAPS |
| 10 | Low capacity density | GEO |
| ... | ... | ... |

It should be understood that Table 13 is merely an example for description, and this embodiment of this application does not specifically limit a quantity of bits included in the information about the total network capacity, a correspondence between a value of the information about the total network capacity and the total network capacity, and the like.

The information about the capability of the cell may include information about a remaining network capacity. The information about the remaining network capacity may indicate different remaining network capacities by using different values. For example, the information about the remaining network capacity may be shown in Table 14.

**Table 14**

| Information about a remaining network capacity | Remaining network capacity | Network deployment |
|---|---|---|
| 00 | High capacity density | Cellular |
| 01 | Medium capacity density | LEO, and HAPS |
| 10 | Low capacity density | GEO |
| ... | ... | ... |

It should be understood that Table 14 is merely an example for description, and this embodiment of this application does not specifically limit a quantity of bits included in the information about the remaining network capacity, a correspondence between a value of the information about the remaining network capacity and the remaining network capacity, and the like.

The information about the capability of the cell may include information about a network handover frequency. The information about the network handover frequency may indicate different network handover frequencies by using different values. For example, the information about the network handover frequency may be shown in Table 15.

**Table 15**

| Information about a network handover frequency | Network handover frequency | Network deployment |
|---|---|---|
| 00 | None or extremely low | Cellular, GEO, and some HAPSs |
| 01 | Low | MEO, some HAPSs, and LEO in a staring mode |
| 10 | High | LEO in a non-staring mode, VLEO, and the like |
| ... | ... | ... |

It should be understood that Table 15 is merely an example for description, and this embodiment of this application does not specifically limit a quantity of bits included in the information about the network handover frequency, a correspondence between a value of the information about the network handover frequency and the network handover frequency, and the like.

The capability of the cell may further be indicated based on other parameters, which are not listed one by one herein.

In the cell selection method shown in FIG. 8, the selection rule includes a correspondence between at least one service type and a priority, and in the another cell selection method provided in this embodiment of this application, the selection rule includes a condition corresponding to at least one parameter.

In the another cell selection method provided in this embodiment of this application, the terminal device may use a selection rule corresponding to a service type based on the service type, and the selection rule includes a condition corresponding to at least one parameter.

For example, if a service type of the terminal device is an IoT service, and the IoT service requires a low network handover frequency but has no requirement for a capacity and a latency, the first selection rule may include a condition corresponding to the network handover frequency. The condition may be that the network handover frequency of the cell is less than a network handover frequency threshold, so that the terminal device may select a cell whose network handover frequency is less than the network handover frequency threshold as the target cell. If the service type of the terminal device is a monitoring service, and the monitoring service requires a high remaining network capacity, the first selection rule may include a condition corresponding to the remaining network capacity. The condition may be that a remaining network capacity of a cell is greater than a remaining network capacity threshold, so that the terminal device may select a cell whose remaining network capacity is greater than the remaining network capacity threshold as the target cell.

For example, a correspondence between the service type and the selection rule may be shown in Table 16.

**Table 16**

| Selection rule | Condition of a network round-trip latency | Condition of a remaining network capacity | Condition of a network handover frequency | Service type |
|---|---|---|---|---|
| Selection rule 1 | None | None | Network handover frequency ≤ network handover frequency threshold | Stability-preferred IoT service |
| Selection rule 2 | Network round-trip latency ≤ network round-trip latency threshold | Remaining network capacity ≥ remaining network capacity threshold | None | Throughput/ latency-preferred eMBB service |
| Selection rule 3 | None | Remaining network capacity <_ remaining network capacity threshold | None | Monitoring IoT service |
| ... | ... | ... | ... | ... |

It should be understood that Table 16 is merely an example for description, and this embodiment of this application does not specifically limit a selection rule.

In some embodiments, when the terminal device determines the target cell, if a plurality of candidate cells satisfy the first selection rule, the terminal device may preferentially select a candidate cell with a highest satisfaction degree as the target cell. For example, assuming that the service type of the terminal device is a stability-preferred IoT service, if a plurality of candidate cells satisfy the selection rule 1 shown in Table 16, the terminal device may select a candidate cell with a lowest network handover frequency as the target cell.

Alternatively, when the terminal device determines the target cell, if a plurality of candidate cells satisfy the first selection rule, the terminal device may select any one of the plurality of candidate cells as the target cell.

In this embodiment of this application, when performing cell reselection, the terminal device may select a target cell based on a capability of the cell, so that the target cell may satisfy a service requirement of the terminal device. For example, when a service type of the terminal device requires a low network handover frequency, the terminal device may preferentially select a cell that has a low network handover frequency. When the service type of the terminal device requires a low latency, the terminal device may select a cell that has a low latency as the target cell, so that a probability that the terminal device selects an inappropriate cell for reselection can be reduced, and user experience can be improved. In addition, in this embodiment of this application, key indicators such as a network round-trip latency, a remaining network capacity, a total network capacity, and a network handover frequency of a neighboring cell are indicated, so that a network deployment status of a network device can be avoided from being exposed, thereby ensuring network privacy.

Based on a same inventive concept as the method embodiments, an embodiment of this application provides a cell handover apparatus. A structure of the cell handover apparatus may be shown in FIG. 11, and the cell handover apparatus includes a processing unit 1101 and a storage unit 1102.

In an implementation, the cell handover apparatus may be specifically configured to implement the method performed by the terminal device in Embodiment 1. The apparatus may be the terminal device, or may be a chip or a chipset in the terminal device, or a part of a chip that is configured to perform a related method function. The storage unit 1102 is configured to store code instructions. The processing unit 1101 is configured to invoke the code instructions stored in the storage unit 1102 to: perform measurement based on measurement configuration information of N cells, where N is an integer greater than 0; determine M candidate cells based on a measurement result, where M is an integer greater than 0 and less than N; and select a target cell from the M candidate cells based on first information, where the first information includes information about a network type of at least one of the M candidate cells, and information about a network type of a first candidate cell in the M candidate cells indicates that the first candidate cell is a terrestrial network, a geostationary earth orbit satellite network, a medium earth orbit satellite network, a low earth orbit satellite network, or a high-altitude platform station network.

For example, the information about the network type of the first candidate cell may include orbit information of a network device corresponding to the first candidate cell.

For example, the information about the network type of the first candidate cell may include network architecture information of the network device corresponding to the first candidate cell.

For example, the information about the network type of the first candidate cell may include beam information of the first candidate cell, and the beam information indicates a beam deployment manner.

Optionally, when performing measurement based on the measurement configuration information of the N cells, the processing unit 1101 is specifically configured to: for an $n^{th}$ cell in the N cells, if a priority corresponding to a network type of the $n^{th}$ cell is higher than a priority corresponding to a network type of a serving cell, perform measurement on the $n^{th}$ cell; or if the priority corresponding to the network type of the $n^{th}$ cell is not higher than the priority corresponding to the network type of the serving cell, perform measurement on the $n^{th}$ cell when the serving cell satisfies a preset condition.

Optionally, when selecting the target cell from the M candidate cells based on the first information, the processing unit 1101 is specifically configured to: select the target cell from the M candidate cells according to the first information and a first selection rule, where the first selection rule is used to select the target cell, and the first selection rule includes a correspondence between at least one network type and a priority.

Optionally, the apparatus may further include a transceiver unit 1103. The transceiver unit 1103 may be configured to: before the processing unit 1101 performs measurement based on the measurement configuration information of the N cells, receive the measurement configuration information of the N cells and the first information from the serving cell. Alternatively, the transceiver unit 1103 may be configured to: after the processing unit 1101 determines the M candidate cells based on the measurement result, receive the first information from the first candidate cell in the M candidate cells.

Optionally, the transceiver unit 1103 may be further configured to receive second information from the serving cell, where the second information indicates the first selection rule.

The transceiver unit 1103 may be further configured to receive third information from the serving cell, where the third information indicates a service type of the terminal device.

In another implementation, the cell handover apparatus may be specifically configured to implement the method performed by the terminal device in Embodiment 2. The apparatus may be the terminal device, or may be a chip or a chipset in the terminal device, or a part of a chip that is configured to perform a related method function. The storage unit 1102 is configured to store code instructions. The processing unit 1101 is configured to invoke the code instructions stored in the storage unit 1102 to: perform measurement based on measurement configuration information of N cells, where N is an integer greater than 0; determine M candidate cells based on a measurement result, where M is an integer greater than 0 and less than N; and select a target cell from the M candidate cells based on first information, where the first information includes information about a capability of at least one of the M candidate cells, and information about a capability of a first candidate cell in the M candidate cells includes at least one of the following parameters of the first candidate cell: a network round-trip latency of the first candidate cell, a total network capacity of the first candidate cell, a remaining network capacity of the first candidate cell, and a network handover frequency of the first candidate cell.

Optionally, when selecting the target cell from the M candidate cells based on the first information, the processing unit 1101 may be specifically configured to: select the target cell from the M candidate cells according to the first information and a first selection rule, where the first selection rule is used to select the target cell, and the first selection rule includes a condition corresponding to at least one parameter.

Optionally, the apparatus may further include a transceiver unit 1103. The transceiver unit 1103 may be configured to: before the processing unit 1101 performs measurement based on the measurement configuration information of the N cells, receive the measurement configuration information of the N cells and the first information from the serving cell. Alternatively, the transceiver unit 1103 may be configured to: after the processing unit 1101 determines the M candidate cells based on the measurement result, receive the first information from the first candidate cell in the M candidate cells.

Optionally, the transceiver unit 1103 may be further configured to receive second information from the serving cell, where the second information indicates the first selection rule.

The transceiver unit 1103 may be further configured to receive third information from the serving cell, where the third information indicates a service type of the terminal device.

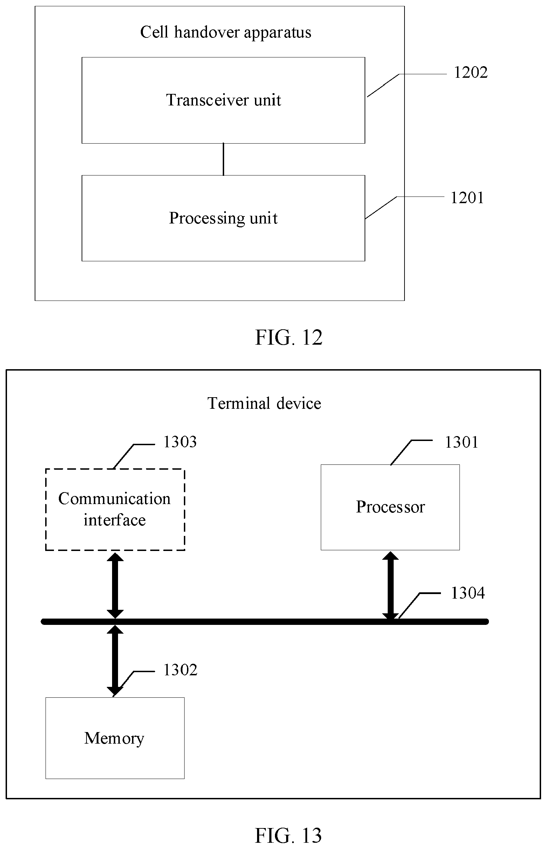

An embodiment of this application provides another communication apparatus. A structure of the cell handover apparatus may be shown in FIG. 12, and the cell handover apparatus includes a processing unit 1201 and a transceiver unit 1202.

In an implementation, the cell handover apparatus may be specifically configured to implement the method performed by the network device in Embodiment 1. The apparatus may be the network device, or may be a chip or a chipset in the network device, or a part of a chip that is configured to perform a related method function. The processing unit 1201 is configured to determine first information, where the first information includes information about a network type of at least one cell, and information about a network type of a first cell in the at least one cell indicates that the first cell is a terrestrial network, a geostationary earth orbit satellite network, a medium earth orbit satellite network, a low earth orbit satellite network, or a high-altitude platform station network. The transceiver unit 1202 is configured to send the first information to a terminal device.

For example, the information about the network type of the first cell may include orbit information of a network device corresponding to the first cell.

For example, the information about the network type of the first cell may include network architecture information of the network device corresponding to the first cell.

For example, the information about the network type of the first cell may include beam information of the first cell, and the beam information indicates a beam deployment manner.

Optionally, the processing unit 1201 may be further configured to determine a selection rule based on a service type of the terminal device, where the selection rule is used to select a target cell, and the selection rule include s a correspondence between at least one network type and a priority.

The transceiver unit 1202 may be further configured to send second information to the terminal device, where the second information indicates the selection rule.

The transceiver unit 1202 may be further configured to send third information to the terminal device, where the third information indicates the service type of the terminal device.

In another implementation, the cell handover apparatus may be specifically configured to implement the method performed by the network device in Embodiment 2. The apparatus may be the network device, or may be a chip or a chipset in the network device, or a part of a chip that is configured to perform a related method function. The processing unit 1201 is configured to determine first information, where the first information includes information about a capability of at least one cell, and information about a capability of a first cell in the at least one cell includes at least one of the following information of the first cell: a network round-trip latency of the first cell, a total network capacity of the first cell, a remaining network capacity of the first cell, and a network handover frequency of the first cell. The transceiver unit 1202 is configured to send the first information to a terminal device.

Optionally, the processing unit 1201 may be further configured to determine a selection rule based on a service type of the terminal device, where the selection rule is used to select a target cell, and the selection rule include s a condition corresponding to at least one capability.

The transceiver unit 1202 may be further configured to send second information to the terminal device, where the second information indicates the selection rule.

The transceiver unit 1202 may be further configured to send third information to the terminal device, where the third information indicates the service type of the terminal device.

In this embodiment of this application, the module division is an example, and is merely logical function division and may be another division manner in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related description in the method embodiments.

In a possible manner, the terminal device may be shown in FIG. 13. The terminal device may include a processor 1301 and a memory 1302, and optionally, may further include a communication interface 1303. The processing unit 1101 may be the processor 1301. The storage unit 1102 may be the memory 1302. The transceiver unit 1103 may be the communication interface 1303.

The processor 1301 may be a central processing unit (central processing unit, CPU), a digital processing unit, or the like. The communication interface 1303 may be a transceiver, an interface circuit such as a transceiver circuit, a transceiver chip, or the like. The memory 1302 is configured to store a program executed by the processor 1301. The memory 1302 may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory 1302 is any other medium that can be used to carry or store expected program code in a form of instructions or a data structure and can be accessed by a computer, which is not limited thereto.

The processor 1301 is configured to execute the program code stored in the memory 1302, and is specifically configured to perform an action of the processing unit 1101. Details are not described herein again in this application. The communication interface 1303 is specifically configured to perform an action of the transceiver unit 1103. Details are not described herein again in this application.

This embodiment of this application does not limit a specific connection medium between the communication interface 1303, the processor 1301, and the memory 1302. In this embodiment of this application, in FIG. 13, the memory 1302, the processor 1301, and the communication interface 1303 are connected by using a bus 1304. The bus is represented by using a bold line in FIG. 13, and a connection manner between other parts is merely used as an example for description, and does not constitute a limitation. The bus may be classified into an address bus, a data bus, a control bus, and the like. For ease of indication, the bus is indicated by using only one thick line in FIG. 13. However, this does not indicate that there is only one bus or only one type of bus.

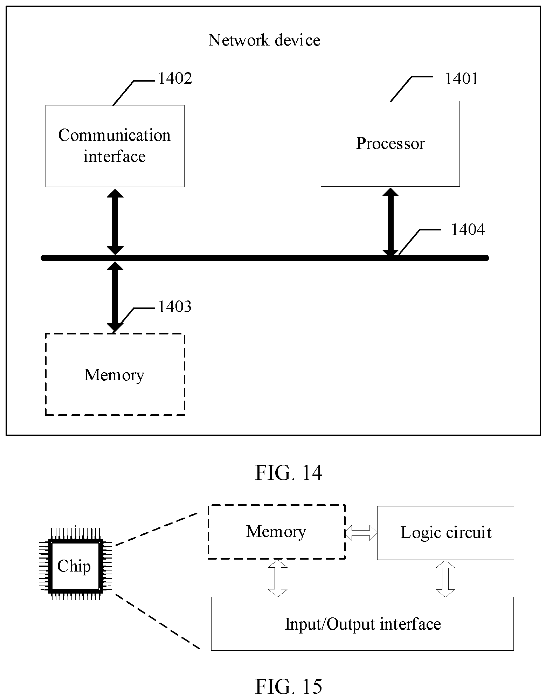

In a possible manner, the network device may be shown in FIG. 14. The apparatus may include a processor 1401 and a communication interface 1402, and may further include a memory 1403. The processing unit 1201 may be the processor 1401. The transceiver unit 1202 may be the communication interface 1402.

The processor 1401 may be a CPU, a digital processing unit, or the like. The communication interface 1402 may be a transceiver, an interface circuit such as a transceiver circuit, a transceiver chip, or the like. The apparatus further includes the memory 1403, configured to store a program executed by the processor 1401. The memory 1403 may be a non-volatile memory such as an HDD or an SSD, or may be a volatile memory such as a RAM. The memory 1403 is any other medium that can be used to carry or store expected program code in a form of instructions or a data structure and can be accessed by a computer, which is not limited thereto.

The processor 1401 is configured to execute the program code stored in the memory 1403, and is specifically configured to perform an action of the processing unit 1201. Details are not described herein again in this application. The communication interface 1402 is specifically configured to perform an action of the transceiver unit 1202. Details are not described herein again in this application.

This embodiment of this application does not limit a specific connection medium between the communication interface 1402, the processor 1401, and the memory 1403. In this embodiment of this application, in FIG. 14, the memory 1403, the processor 1401, and the communication interface 1402 are connected by using a bus 1404. The bus is represented by using a bold line in FIG. 14, and a connection manner between other parts is merely used as an example for description, and does not constitute a limitation. The bus may be classified into an address bus, a data bus, a control bus, and the like. For ease of indication, the bus is indicated by using only one thick line in FIG. 14. However, this does not indicate that there is only one bus or only one type of bus.

An embodiment of this application further provides a communication apparatus, including a processor and an interface. The processor may be configured to perform the method in the foregoing method embodiments. It should be understood that the communication apparatus may be a chip. For example, the communication apparatus may be a field programmable gate array (field programmable gate array, FPGA), an application-specific integrated chip (application specific integrated circuit, ASIC), a system on chip (system on chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip.

For example, the interface may be an interface circuit. For example, the interface circuit may be a code/data read/write interface circuit. The interface circuit may be configured to receive code instructions (where the code instructions are stored in a memory and may be directly read from the memory, or may be read from the memory by using another component), and transmit the code instructions to the processor. The processor may be configured to run the code instructions to perform the method in the foregoing method embodiments.

For another example, the interface circuit may alternatively be a signal transmission interface circuit between a communication processor and a transceiver. For example, in a sending scenario, the processor is configured to perform XX to obtain Y data (where XX is a non-air interface operation, and includes but is not limited to operations such as determining, judging, processing, calculating, searching, and comparing). The interface circuit may be configured to send the Y data to a transmitter (where the transmitter is configured to perform a sending operation on an air interface). For another example, in a receiving scenario, the interface circuit may be configured to receive Z data from a receiver (where the receiver is configured to perform a receiving operation on an air interface), and send the Z data to the processor. The processor is configured to perform XX processing on the Z data (where XX is a non-air interface operation, and includes but is not limited to operations such as determining, judging, processing, calculating, searching, and comparing).

For example, FIG. 15 shows a possible chip structure. The chip includes a logic circuit and an input/output interface, and may further include a memory. The input/output interface may be configured to receive code instructions (where the code instructions are stored in a memory and may be directly read from the memory, or may be read from the memory by using another component), and transmit the code instructions to the logic circuit. The logic circuit may be configured to run the code instructions to perform the method in the foregoing method embodiments.

Alternatively, the input/output interface may be a signal transmission interface circuit between the logic circuit and the transceiver. For example, in a sending scenario, the logic circuit is configured to perform XX to obtain Y data (where XX is a non-air interface operation, and includes but is not limited to operations such as determining, judging, processing, calculating, searching, and comparing). The input/output interface may be configured to send the Y data to a transmitter (where the transmitter is configured to perform a sending operation on an air interface). For another example, in a receiving scenario, the input/output interface may be configured to receive Z data from a receiver (where the receiver is configured to perform a receiving operation on an air interface), and send the Z data to the logic circuit. The logic circuit is configured to perform XX processing on the Z data (where XX is a non-air interface operation, and includes but is not limited to operations such as determining, judging, processing, calculating, searching, and comparing).

An embodiment of the present invention further provides a computer-readable storage medium, configured to store computer software instructions that need to be executed for execution of the foregoing processor, and the computer-readable storage medium includes a program that needs to be executed for execution of the foregoing processor.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that each procedure and/or block in the flowcharts and/or block diagrams, and combinations of the procedures and/or blocks in the flowcharts and/or block diagrams may be implemented by computer program instructions. These computer program instructions may be provided to a processor of a general-purpose computer, a special-purpose computer, an embedded processor, or another programmable data processing device to generate a machine, such that the instructions executed by the processor of the computer or another programmable data processing device generate an apparatus for implementing a specific function in one or more procedures in the flowcharts and/or one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to this application without departing from the spirit and scope of this application. This application is intended to cover these modifications and variations of this application provided that they fall within the scope of protection defined by the claims of this application and their equivalent technologies.

**Claims**

1. A cell selection method, comprising:

    performing, by a terminal device, measurement based on measurement configuration information of N cells, wherein N is an integer greater than 0;
    determining, by the terminal device, M candidate cells based on a measurement result, wherein M is an integer greater than 0 and less than N; and
    selecting, by the terminal device, a target cell from the M candidate cells based on first information, wherein the first information comprises information about a network type of at least one of the M candidate cells, and information about a network type of a first candidate cell in the M candidate cells indicates that the first candidate cell is a terrestrial network, a geostationary earth orbit satellite network, a medium earth orbit satellite network, a low earth orbit satellite network, or a high-altitude platform station network.

2. The method according to claim 1, wherein the information about the network type of the first candidate cell comprises orbit information of a network device corresponding to the first candidate cell.

3. The method according to claim 1 or 2, wherein the information about the network type of the first candidate cell comprises network architecture information of the network device corresponding to the first candidate cell.

4. The method according to any one of claims 1 to 3, wherein the information about the network type of the first candidate cell comprises beam information of the first candidate cell, and the beam information indicates a beam deployment manner.

5. The method according to any one of claims 1 to 4, wherein the performing, by a terminal device, measurement based on measurement configuration information of N cells comprises:

    for an $n^{th}$ cell in the N cells, if a priority corresponding to a network type of the $n^{th}$ cell is higher than a priority corresponding to a network type of a serving cell, performing, by the terminal device, measurement on the $n^{th}$ cell; or
    if the priority corresponding to the network type of the $n^{th}$ cell is not higher than the priority corresponding to the network type of the serving cell, performing, by the terminal device, measurement on the n$^{th}$ cell when the serving cell satisfies a preset condition.

6. The method according to any one of claims 1 to 5, wherein the selecting, by the terminal device, a target cell from the M candidate cells based on first information comprises:
selecting, by the terminal device, the target cell from the M candidate cells according to the first information and a first selection rule, wherein the first selection rule is used to select the target cell, and the first selection rule comprises a correspondence between at least one network type and a priority.

7. The method according to claim 6, further comprising:
receiving, by the terminal device, second information from the serving cell, wherein the second information indicates the first selection rule.

8. The method according to any one of claims 1 to 7, wherein before the performing, by a terminal device, measurement based on measurement configuration information of N cells, the method further comprises:
receiving, by the terminal device, the measurement configuration information of the N cells and the first information from the serving cell.

9. The method according to any one of claims 1 to 7, wherein after the determining, by the terminal device, M candidate cells based on a measurement result, the method further comprises:
receiving, by the terminal device, the first information from the first candidate cell in the M candidate cells.

10. The method according to any one of claims 1 to 9, wherein the method further comprises:
receiving, by the terminal device, third information from the serving cell, wherein the third information indicates a service type of the terminal device.

11. A cell selection method, comprising:

determining, by a network device, first information, wherein the first information comprises information about a network type of at least one cell, and information about a network type of a first cell in the at least one cell indicates that the first cell is a terrestrial network, a geostationary earth orbit satellite network, a medium earth orbit satellite network, a low earth orbit satellite network, or a high-altitude platform station network; and
sending, by the network device, the first information to a terminal device.

12. The method according to claim 11, wherein the information about the network type of the first cell comprises orbit information of the network device corresponding to the first cell.

13. The method according to claim 11 or 12, wherein the information about the network type of the first cell comprises network architecture information of the network device corresponding to the first cell.

14. The method according to any one of claims 11 to 13, wherein the information about the network type of the first cell comprises beam information of the first cell, and the beam information indicates a beam deployment manner.

15. The method according to any one of claims 11 to 14, further comprising:

determining, by the network device, a selection rule based on a service type of the terminal device, wherein the selection rule is used to select a target cell, and the selection rule comprises a correspondence between at least one network type and a priority; and
sending, by the network device, second information to the terminal device, wherein the second information indicates the selection rule.

16. The method according to any one of claims 11 to 15, further comprising:
sending, by the network device, third information to the terminal device, wherein the third information indicates the service type of the terminal device.

17. A cell selection apparatus, comprising:

a storage unit, configured to store code instructions; and

a processing unit, configured to invoke the code instructions stored in the storage unit to:

perform measurement based on measurement configuration information of N cells, wherein N is an integer greater than 0;

determine M candidate cells based on a measurement result, wherein M is an integer greater than 0 and less than N; and

select a target cell from the M candidate cells based on first information, wherein the first information comprises information about a network type of at least one of the M candidate cells, and information about a network type of a first candidate cell in the M candidate cells indicates that the first candidate cell is a terrestrial network, a geostationary earth orbit satellite network, a medium earth orbit satellite network, a low earth orbit satellite network, or a high-altitude platform station network.

18. The apparatus according to claim 17, wherein the information about the network type of the first candidate cell comprises orbit information of a network device corresponding to the first candidate cell.

19. The apparatus according to claim 17 or 18, wherein the information about the network type of the first candidate cell comprises network architecture information of the network device corresponding to the first candidate cell.

20. The apparatus according to any one of claims 17 to 19, wherein the information about the network type of the first candidate cell comprises beam information of the first candidate cell, and the beam information indicates a beam deployment manner.

21. The apparatus according to any one of claims 17 to 20, wherein when performing measurement based on the measurement configuration information of the N cells, the processing unit is specifically configured to:

for an $n^{th}$ cell in the N cells, if a priority corresponding to a network type of the $n^{th}$ cell is higher than a priority corresponding to a network type of a serving cell, perform measurement on the $n^{th}$ cell; or

if the priority corresponding to the network type of the $n^{th}$ cell is not higher than the priority corresponding to the network type of the serving cell, perform measurement on the $n^{th}$ cell when the serving cell satisfies a preset condition.

22. The apparatus according to any one of claims 17 to 21, wherein when selecting the target cell from the M candidate cells based on the first information, the processing unit is specifically configured to:
select the target cell from the M candidate cells according to the first information and a first selection rule, wherein the first selection rule is used to select the target cell, and the first selection rule comprises a correspondence between at least one network type and a priority.

23. The apparatus according to claim 22, further comprising a transceiver unit, wherein
the transceiver unit is configured to receive second information from the serving cell, wherein the second information indicates the first selection rule.

24. The apparatus according to any one of claims 17 to 23, further comprising the transceiver unit, wherein
the transceiver unit is configured to: before the processing unit performs measurement based on the measurement configuration information of the N cells, receive the measurement configuration information of the N cells and the first information from the serving cell.

25. The apparatus according to any one of claims 17 to 24, further comprising the transceiver unit, wherein
the transceiver unit is configured to: after the processing unit determines the M candidate cells based on the measurement result, receive the first information from the first candidate cell in the M candidate cells.

26. The apparatus according to any one of claims 17 to 25, further comprising the transceiver unit, wherein
the transceiver unit is configured to receive third information from the serving cell, wherein the third information indicates a service type of a terminal device.

27. A cell selection apparatus, comprising:

a processing unit, configured to determine first information, wherein the first information comprises information about a network type of at least one cell, and information about a network type of a first cell in the at least one cell indicates that the first cell is a terrestrial network, a geostationary earth orbit satellite network, a medium earth orbit satellite network, a low earth orbit satellite network, or a high-altitude platform station network; and a transceiver unit, configured to send the first information to a terminal device.

28. The apparatus according to claim 27, wherein the information about the network type of the first cell comprises orbit information of a network device corresponding to the first cell.

29. The apparatus according to claim 27 or 28, wherein the information about the network type of the first cell comprises network architecture information of the network device corresponding to the first cell.

30. The apparatus according to any one of claims 27 to 29, wherein the information about the network type of the first cell comprises beam information of the first cell, and the beam information indicates a beam deployment manner.

31. The apparatus according to any one of claims 27 to 30, wherein the processing unit is further configured to determine a selection rule based on a service type of the terminal device, wherein the selection rule is used to select a target cell, and the selection rule comprises a correspondence between at least one network type and a priority; and the transceiver unit is further configured to send second information to the terminal device, wherein the second information indicates the selection rule.

32. The apparatus according to any one of claims 27 to 31, wherein the transceiver unit is further configured to send third information to the terminal device, wherein the third information indicates the service type of the terminal device.

33. A communication device, comprising a transceiver, a processor, and a memory, wherein the memory stores program instructions, and when the program instructions are executed, the communication device is enabled to perform the method according to any one of claims 1 to 10.

34. A communication device, comprising a transceiver, a processor, and a memory, wherein the memory stores program instructions, and when the program instructions are executed, the communication device is enabled to perform the method according to any one of claims 11 to 16.

35. A chip, wherein the chip is coupled to a memory in an electronic device, so that when the chip is run, the chip invokes program instructions stored in the memory, to implement the method according to any one of claims 1 to 10, or implement the method according to any one of claims 11 to 16.

36. A computer-readable storage medium, comprising program instructions, wherein when the program instructions are run on a device, the device is enabled to perform the method according to any one of claims 1 to 16.

37. A communication system, comprising a cell handover apparatus according to any one of claims 17 to 26 and a cell handover apparatus according to any one of claims 27 to 32.

FIG. 1

FIG. 2

**FIG. 3**

**FIG. 4**

FIG. 5

GEO satellite

LEO
satellite

LEO
satellite

LEO
satellite

Gateway
device

Gateway
device

Core
network
device

Terminal
device

Terminal device

Terminal
device

Base station

Terminal
device

FIG. 6

FIG. 7

FIG. 8

FIG. 9

Network device

Terminal device

S802: Perform measurement based on measurement configuration information of N cells

S803: Determine M candidate cells based on a measurement result

First information

S804: Select a target cell from the M candidate cells based on the first information

FIG. 10

Cell handover apparatus

Transceiver unit — 1103

Processing unit — 1101

Storage unit — 1102

FIG. 11

Cell handover apparatus

Transceiver unit — 1202

Processing unit — 1201

FIG. 12

Terminal device

Communication interface — 1303

Processor — 1301

— 1304

Memory — 1302

FIG. 13

Network device

— 1402

Communication interface

— 1401

Processor

— 1404

— 1403

Memory

FIG. 14

Chip

Memory

Logic circuit

Input/Output interface

FIG. 15

## INTERNATIONAL SEARCH REPORT

| International application No. |
|---|
| **PCT/CN2021/141779** |

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, CNPAT, CNKI: 小区, 选择, 切换, 地面网络, 非地面网络, 卫星, 类型, 指示, 优先级, cell, select, handover, non, terrestrial network, satellite, type, indication, priority

**C. DOCUMENTS CONSIDERED TO BE RELEVANT**

| Category* | Citation of document, with indication, where appropriate, of the relevant passages | Relevant to claim No. |
|---|---|---|
| X | WO 2020164069 A1 (ZTE CORP.) 20 August 2020 (2020-08-20) description page 1 paragraph 2 - page 19 paragraph 1, figures 1-7 | 1-37 |
| A | CN 108024299 A (HUAWEI TECHNOLOGIES CO., LTD.) 11 May 2018 (2018-05-11) entire document | 1-37 |
| A | US 2020314914 A1 (MEDIATEK SINGAPORE PTE. LTD.) 01 October 2020 (2020-10-01) entire document | 1-37 |
| A | WO 2020092561 A1 (IDAC HOLDINGS, INC.) 07 May 2020 (2020-05-07) entire document | 1-37 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2022** | **30 March 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141779**

| Patent document cited in search report | | | Publication date (day/month/year) | Patent family member(s) | | | Publication date (day/month/year) |
|---|---|---|---|---|---|---|---|
| WO | 2020164069 | A1 | 20 August 2020 | US | 2021377832 | A1 | 02 December 2021 |
| | | | | KR | 20210124424 | A | 14 October 2021 |
| | | | | EP | 3925284 | A1 | 22 December 2021 |
| | | | | CN | 113439457 | A | 24 September 2021 |
| CN | 108024299 | A | 11 May 2018 | EP | 3897039 | A1 | 20 October 2021 |
| | | | | EP | 3528543 | A1 | 21 August 2019 |
| | | | | US | 2019261236 | A1 | 22 August 2019 |
| | | | | US | 2020187070 | A1 | 11 June 2020 |
| | | | | WO | 2018082674 | A1 | 11 May 2018 |
| | | | | CN | 112333782 | A | 05 February 2021 |
| US | 2020314914 | A1 | 01 October 2020 | TW | 202042578 | A | 16 November 2020 |
| | | | | WO | 2020192752 | A1 | 01 October 2020 |
| | | | | CN | 112042227 | A | 04 December 2020 |
| WO | 2020092561 | A1 | 07 May 2020 | EP | 3874780 | A1 | 08 September 2021 |
| | | | | CN | 113196810 | A | 30 July 2021 |
| | | | | US | 2021377825 | A1 | 02 December 2021 |
| | | | | KR | 20210095873 | A | 03 August 2021 |

Form PCT/ISA/210 (patent family annex) (January 2015)

44

**REFERENCES CITED IN THE DESCRIPTION**

**Patent documents cited in the description**

- CN 202011644666